(19) Europäisches Patentamt
European Patent Office
Office européen des brevets

(11) Veröffentlichungsnummer: **0 082 415**
**B1**

# (12) EUROPÄISCHE PATENTSCHRIFT

(45) Veröffentlichungstag der Patentschrift: **30.04.86**

(51) Int. Cl.⁴: **C 09 B 62/515**, C 09 B 62/095, D 06 P 3/66, D 06 P 3/10

(21) Anmeldenummer: **82111384.2**

(22) Anmeldetag: **08.12.82**

## (54) Wasserlösliche Schwermetallkomplex-Azoverbindungen, Verfahren zu ihrer Herstellung und ihre Verwendung als Farbstoffe.

(30) Priorität: **12.12.81 DE 3149388**

(43) Veröffentlichungstag der Anmeldung: **29.06.83 Patentblatt 83/26**

(45) Bekanntmachung des Hinweises auf die Patenterteilung: **30.04.86 Patentblatt 86/18**

(84) Benannte Vertragsstaaten: **CH DE FR GB IT LI**

(56) Entgegenhaltungen:
**EP - A - 0 014 432**
**GB - A - 2 008 144**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Fuchs, Hermann, Dr., Altenhainer Strasse 2, D-6240 Königstein/Taunus (DE)**

**EP 0 082 415 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

**Wasserlösliche Schwermetallkomplex-Azoverbindungen, Verfahren zu ihrer Herstellung und ihre Verwendung als Farbstoffe**

Die Erfindung liegt auf dem technischen Gebiet der Metallkomplex-Azofarbstoffe, die faserreaktive Eigenschaften besitzen.

Von den Beispielen 222 bis 229 der britischen Patentanmeldungs-Veröffentlichtung Nr. 2 008 144 A sind metallfreie Disazofarbstoffe bekannt, die den nachfolgend beschriebenen erfindungsgemäßen Verbindungen konstitutionell ähnlich sind und ebenfalls einen Bis-aminophenoxy-äthan-Rest, jedoch ohne eine faserreaktive Gruppe der Vinylsulfon-Reihe, als Brückenglied entalten. Der konstitutionell ähnlichste bekannte Farbstoff aus dem Beispiel 228 mit einer Carboxygruppe, die zur Metallkomplexbildung fähig wäre, liefert auf Cellulosefasermaterialien Färbungen, deren Hypochloritbleichechtheit und Lichtechteit verbesserungswürdig erscheinen.

Es wurden mit dieser Erfindung neue wasserlösliche symmetrische Schwermetallkomplex-Azoverbindungen, vorzugsweise 1:1-Kupferkomplex-, 1:2-Chromkomplex- und 1:2-Kobaltkomplex-Azoverbindungen, einer metallfreien Azoverbindung der allgemeinen Formel (1)

10

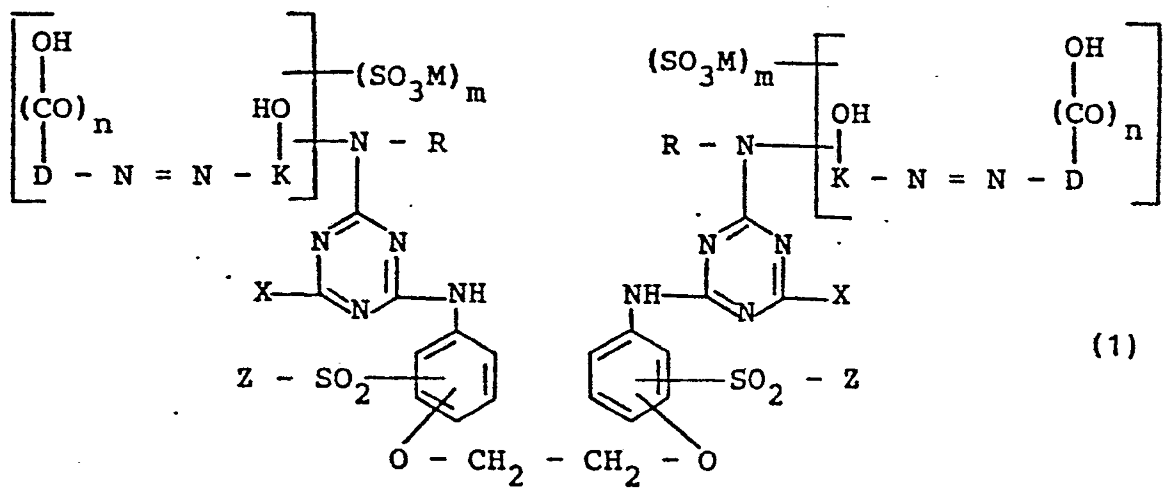

(1)

gefunden. In dieser Formel bedeuten:

m ist die Zahl 1, 2 oder 3;

n ist die Zahl Null oder 1, vorzugsweise Null;

D ist der Rest einer Diazokomponente der Benzol- oder Naphthalinreihe, an den die Triazinylaminogruppe und die angegebene(n) Sulfogruppe(n) gebunden sein können und der neben diesen Gruppen und der metallkomplexbildenden Carboxy- bzw. Hydroxygruppe, die an D in ortho-Stellung zur Azogruppe gebunden ist, noch weitere Substituenten und/oder eine faserreaktive Gruppe enthalten kann, wobei diese beiden Diazokomponenten gleich sind;

K ist zusammen mit der Hydroxygruppe der Rest einer Kupplungskomponente der Naphthol-, 1-Aryl-pyrazolon- oder Acetessigsäurearylid-Reihe,wobei die Arylreste vorzugsweise unsubstituierte oder substituierte phenyl- oder Naphthylreste sind -, an den die Triazinylaminogruppe und die angegebene(n) Sulfogruppe(n) gebunden sein können und der neben diesen Gruppen und der metallkomplexbildenden Hydroxygruppe, die an K in ortho-Stellung zur Azogruppe gebunden ist, noch weitere Substituenten und/oder eine faserreaktive Gruppe enthalten kann, wobei diese beiden Kupplungskomponenten gleich sind;

R ist ein Wasserstoffatom oder eine niedere Alkylgruppe, wobei beide R gleiche Bedeutungen besitzen;

X ist ein Chlor- oder Fluoratom, wobei beide X gleiche Bedeutungen besitzen;

Z ist die Vinylgruppe oder eine Gruppe der Formel $-CH_2-CH_2-Y$, in welcher

Y einen anorganischen oder organischen, alkalisch eliminierbaren Rest bedeutet;

M ist ein Wasserstoffatom oder das Äquivalent eines ein-, zwei- oder dreiwertigen Metalls, insbesondere eines solchen der 1., 2. oder 3. Hauptgruppe, so bevorzugt eines Alkali- oder Erdalkalimetalls, wie insbesondere des Natriums, Kaliums und Calciums;

die beiden Gruppen $-SO_2-Z$, die an die beiden durch den Äthylendioxirest verbundenen Benzolkerne gebunden sind, haben gleiche Bedeutung und sind jeweils zu den Aminogruppen bevorzugt meta-ständig orientiert und sind ebenso bevorzugt jeweils in ortho- oder jeweils in para-Stellung zum Äthylendioxirest gebunden;

die Triazinylaminogruppe kann jeweils an den Formelrest D oder an den Formelrest K gebunden sein;

die angegebene(n) Sulfogruppe(n) kann (können) an D oder

Die Angaben "niedere" bedeuten hier wie im folgenden, daß der in der Gruppe enthaltene Alkyl- oder Alkylenrest jeweils aus 1 bis 4 C-Atomen besteht. Niedere Alkylgruppen sind vorzugsweise die Äthylgruppe und insbesondere die Methylgruppe; niedere Alkoxygruppen sind bevorzugt die Äthoxygruppe und insbesondere die Methoxygruppe.

Die neuen Schwermetallkomplex-Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben und Bedrucken von hydroxy- und/oder carbonamidgruppenhaltigen Materialien, insbesondere Fasermaterialien.

Alkalisch eliminierbare Gruppen Y sind beispielsweise ein Halogenatom, wie das Fluor-, Chlor- und Bromatom, Estergruppen aliphatischer oder aromatischer Sulfonsäuren, wie beispielsweise die Methylsulfonyloxy-, die Äthylsulfonyloxy-, die Benzolsulfonyloxy- und die Toluolsulfonyloxy-Gruppe, weiterhin beispielsweise die Monoestergruppen von anorganischen Säuren, wie beispielsweise die Phosphatogruppe (entsprechend der allgemeinen Formel $-OPO_3M_2$ mit M der obengenannten Bedeutung), die Thiosulfatogruppe (entsprechend der allgemeinen Formel $-S-SO_3M$ mit M der obengenannten Bedeutung) und insbesondere die Sulfatogruppe (entsprechend der allgemeinen Formel $-OSO_3M$ mit M der oben angegebenen Bedeutung), ebenso die Estergruppen organischer aliphatischer oder aromatischer Carbonsäuren, wie beispielsweise die Acetyloxy- und die Sulfobenzoyloxy-Gruppe.

Bevorzugt steht Z für die Vinylgruppe und insbesondere für die β-Sulfatoäthyl-Gruppe.

Weitere Substituenten, die in der Diazokomponente D, wie oben erwähnt, enthalten sein können, sind beispielsweise niedere Alkylgruppen, niedere Alkoxygruppen, die Nitrogruppe, Halogenatome, wie das Fluor-, Chlor- oder Bromatom, Carboxygruppen, niedere Carbonsäurealkylestergruppen, Carbonsäurephenylestergruppen, wobei der Phenylrest substituiert sein kann, Carbonsäureamidgruppen, die durch niedere Alkylgruppen, einen Phenylrest und/oder niedere Phenylalkylgruppen, wie die Benzylgruppe, mono- oder disubstituiert sein können, Sulfonsäureamidgruppen, die durch niedere Alkylgruppen, einen Phenylrest und/oder niedere Phenylalkylgruppen mono- oder disubstituiert sein können, niedere Alkylsulfonylgruppen, niedere Alkanoylaminogruppen, wie insbesondere die Acetylaminogruppe, die Benzoylaminogruppe und gegebenenfalls substituierte Arylazogruppen. Im obigen Sinne weitere Substituenten an D sind drei Substituenten, bevorzugt zwei oder ein Substituent(en), die aus der Menge: 3 niedere Alkylgruppen, 2 niedere Alkoxygruppem, 1 Nitrogruppe, 1 Chloratom, 1 Bromatom, 1 Carboxygruppe, 1 niedere Carbalkoxygruppe, 1 Carbamoyl- und 1 Sulfamoylgruppe ausgewählt sind. Besonders hervorzuheben von diesen Substituenten sind die Nitrogruppe, die Carboxygruppe und das Bromatom, insbesondere jedoch die Methoxy-, Äthoxy-, Methyl- und Äthylgruppen und die Chloratome.

Weitere Substituenten, die an den Formelrest K, wie oben erwähnt, gebunden sein können, sind, sofern der Formelrest -K-OH der Rest einer Kupplungskomponente der Naphtholreihe bedeutet, beispielsweise niedere Alkanoylaminogruppen, wie die Propionylaminogruppe und die Acetylaminogruppe, sowie die Benzoylaminogruppe, die im Phenylrest durch niedere Alkylgruppen, niedere Alkoxygruppen, ein Chloratom und/oder eine Sulfogruppe substituiert sein kann. Sofern der Formelrest -K-OH der Rest einer Kupplungskomponente der 1-Aryl-pyrazolon- oder Acetessigsäurearylid-Reihe bedeutet, sind die weiteren Substituenten an den Arylrest gebunden; diese sind beispielsweise niedere Alkylgruppen, niedere Alkoxygruppen, die Nitrogruppe, Halogenatome, wie das Fluor-, Chlor- und Bromatom, Carbonsäuregruppen, niedere Carbonsäurealkylestergruppen, die Carbonsäurephenylestergruppe, wobei deren Phenylrest substituiert sein kann, die Carbonsäureamidgruppe, die durch niedere Alkylgruppen, einen Phenylrest und/oder niedere Phenylalkylgruppen mono- oder disubstituiert sein kann, die Sulfonsäureamidgruppe, die durch niedere Alkylgruppen, einen Phenylrest und/oder niedere Phenylalkylgruppen monooder disubstituiert sein kann, niedere Alkylsulfonylgruppen, niedere Alkanoylaminogruppen, wie die Acetylaminogruppe, und die Benzoylaminogruppe. Bevorzugt können diese Arylreste mit 1, 2 oder 3 weiteren Substituenten substituiert sein, die aus der Gruppe: 3 niedere Alkylgruppen, 2 niedere Alkoxygruppen, 1 Nitrogruppe, 2 Chloratome, 1 Bromatom, 1 Carboxygruppe, 1 niedere Carbalkoxygruppe, 1 Carbamoylgruppe und 1 Sulfamoylgruppe ausgewählt sind.

Sofern der Formelrest -K-OH der Rest einer Kupplungskomponente der oben erwähnten Pyrazolonreihe ist, ist der Pyrazolonrest bevorzugt der pyrazol-5-on-Rest, der in 3-Stellung durch die Carbamoylgruppe, die Phenylgruppe, eine niedere Carbalkoxygruppe, bevorzugt jedoch durch die Methylgruppe oder Carboxygruppe substituiert ist.

Der Formelrest D oder K kann, wie oben erwähnt, durch eine weitere faserreaktive Gruppe substituiert sein; diese Gruppe kann eine Gruppe der oben definierten Formel $-SO_2-Z$ oder eine andere, zahlreich in der Literatur bekannte faserreaktive Gruppe sein. Solche faserreaktiven Gruppen sind beispielsweise in der deutschen Offenlegungsschrift 28 40 120 auf Seite 5, Zeile 33 bis Seite 8, Zeile 23, beschrieben. Bevorzugt als weitere faserreaktive Gruppe sind hiervon jedoch die oben erwähnte und definierte Gruppe der Formel $-SO_2-Z$, der 2,3-Dichlorchinoxalincarbonylaminorest der 2,4-Difluor-5-chlor-pyrimidylaminorest, der 2,4-Dichlor-s-triazinylaminorest, der 2-Chlor-4-niederes Alkoxy-s-triazinylaminorest, die 2-Fluor- und die 2-Chlor-4-amino-s-triazinylamino-Reste hervorzuheben, wobei der in den beiden letztgenannten Resten befindliche 4-Aminosubstituent die primäre Aminogruppe oder eine sekundäre oder tertiäre Aminogruppe sein kann (diese sekundären oder tertiären Aminogruppen tragen als Substituenten niedere Alkylgruppen, die substituiert sein können, cycloaliphatische Reste und/oder gegebenenfalls substituierte aromatische Reste; substituierte niedere Alkylgruppen sind bspw. solche, die durch einen oder zwei Substituenten substituiert sind, die der Gruppe Acetylamino, Hydroxy, Sulfato, niederes Alkoxy, Phenyl, Naphthyl, durch Sulfo, Carboxy, niederes Alkyl, niederes

Alkoxy, Chlor, Sulfamoyl und/oder Carbamoyl substituiertes Phenyl, durch Sulfo, Carboxy, niederes Alkyl, niederes Alkoxy, Chlor, Sulfamoyl und/oder Carbamoyl substituiertes Naphthyl und insbesondere Sulfo und Carboxy angehören; ein cycloaliphatischer Rest ist der Cyclohexylrest; aromatische Reste sind bspw. die Phenyl- oder Naphthylgruppe, die beide bspw. durch Substituenten aus der Gruppe Carboxy, Sulfo, niederes Alkyl, niederes Alkoxy, Hydroxy und Chlor substituiert sein können; tertiäre Aminogruppen können auch Reste heterocyclischer Ringe sein, die neben dem Stickstoffatom der "tertiären" Aminogruppe noch ein oder zwei weitere Heteroatome, wie bspw. Stickstoff-, Sauerstoffund Schwefelatome enthalten können, beispielsweise der Morpholin-, Piperidin- und Piperazinrest.).

Die vorliegende Erfindung betrifft weiterhin Verfahren zur Herstellung der erfindungsgemäßen Schwermetallkomplex-Azoverbindungen. Diese sind dadurch gekennzeichnet, daß man

a) ein Diazoniumsalz eines aromatischen Amins der allgemeinen Formel (2)

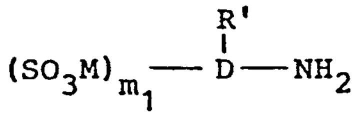

(2)

in welcher M die obengenannte Bedeutung besitzt, R' an D in ortho-Stellung zur primären Aminogruppe gebunden ist und ein Wasserstoffatom, die Hydroxygruppe, die Carboxygruppe oder eine niedere Alkoxygruppe bedeutet, $m_1$ die Zahl Null, 1, 2 oder 3 bedeutet und D den oben genannten Rest einer Diazokomponente der Benzol- oder Naphthalinreihe ist, der neben der angegebenen Gruppe R' und gegebenenfalls den angegebenen Sulfogruppen noch durch weitere Substituenten, wie oben für Formel (1) erwähnt, und/oder eine faserreaktive Gruppe, wie oben für Formel (1) erwähnt, substituiert sein kann, in zweifach molarer Menge mit einer bivalenten Kupplungskomponente der allgemeinen Formel (3)

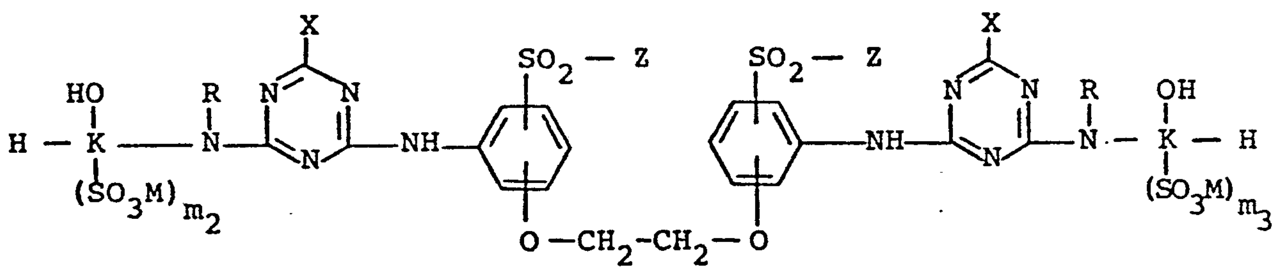

(3)

in welcher $m_2$ und $m_3$ beide gleich sind und jedes für die Zahl Null, 1, 2 oder 3 steht, der Formelrest -K-OH für den oben genannten Rest einer Kupplungskomponente der Naphthol-, 1-Aryl-pyrazolon- oder Acetessigsäurearylid-Reihe steht, der neben den in Formel (3) angegebenen Substituenten und der metallkomplexbildenden Hydroxygruppe noch weitere Substituenten, wie für Formel (1) erwähnt, und/oder eine faserreaktive Gruppe, wie für Formel (1) erwähnt, enthalten kann, wobei diese beiden Kupplungskomponenten gleich sind, R, M, X und Z die obengenannten Bedeutungen haben und die beiden Gruppen -$SO_2$-Z, die an die beiden durch den Äthylendioxirest verbundenen Benzolkerne gebunden sind, gleiche Bedeutungen haben und jeweils zu den Aminogruppen bevorzugt meta-ständig orientiert und ebenso bevorzugt jeweils in ortho- oder jeweils in para-Stellung zum Äthylendioxirest gebunden sind, kuppelt, wobei man die Komponenten so auswählt, daß die Summe von ($m_1$ + $m_2$) und von ($m_1$ + $m_3$) jeweils die Bedeutung von m besitzen, oder daß man

b) eine Diaminoverbindung der allgemeinen Formel (4)

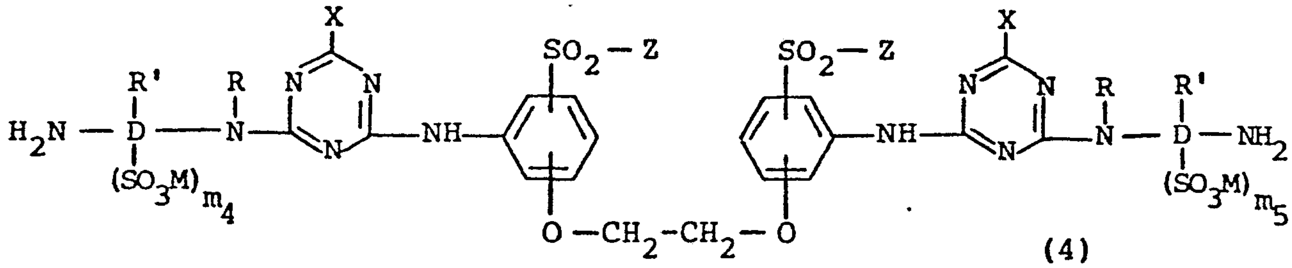

(4)

in welcher R', R, M, X und Z die obengenannten Bedeutungen haben, $m_4$ und $m_5$ beide gleich sind und jedes für die Zahl Null, 1, 2 oder 3 steht, D den obengenannten Rest einer Diazokomponente der Benzol- oder Naphthalinreihe bedeutet, der neben den in Formel (4) angegebenen Substituenten noch weitere Substituenten, wie oben erwähnt, und/oder eine faserreaktive Gruppe, wie oben erwähnt, enthalten kann, wobei diese beiden Diazokomponenten gleich sind, und die beiden Gruppen $-SO_2-Z$, die an die beiden durch den Äthylendioxirest verbundenen Benzolkerne gebunden sind, gleiche Bedeutungen haben und jeweils zu den Aminogruppen bevorzugt meta-ständig orientiert und ebenso bevorzugt jeweils in ortho- oder jeweils in para-Stellung zum Äthylendioxirest gebunden sind, analog einer bekannten und üblichen Verfahrensweise tetrazotiert und mit einer Kupplungskomponente der allgemeinen Formel (5)

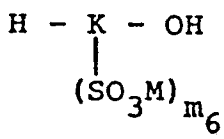

(5)

in welcher $m_6$ für die Zahl Null, 1, 2 oder 3 steht und der Formelrest -K-OH den obengenannten Rest einer Kupplungskomponente der Naphthol-, 1-Aryl-pyrazolon- oder Acetessigsäurearylid-Reihe bedeutet, an den außer den in Formel (5) angegebenen Substituenten noch weitere Substituenten, wie oben erwähnt, und/oder eine faserreaktive Gruppe, wie oben erwähnt, gebunden sein können, kuppelt, wobei man die Komponenten so auswählt, daß die Summe von $(m_4 + m_6)$ und von $(m_5 + m_6)$ jeweils die Bedeutung von m besitzen, oder daß man

c) eine Azoverbindung der allgemeinen Formel (6)

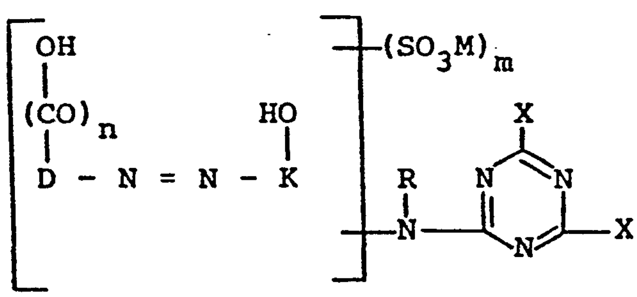

(6)

worin -K-OH, D, M, R, X, m und n die für Formel (1) angegebenen Bedeutungen besitzen, wobei die Dihalogenotriazinylaminogruppe an D oder K gebunden sein kann, in zweifach molarer Menge mit einer Diaminoverbindung der allgemeinen Formel (7)

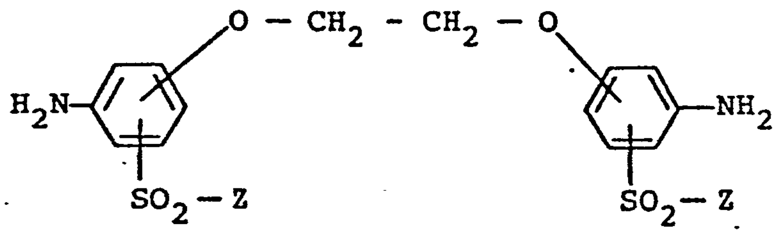

(7)

in welcher Z die obengenannte jeweils gleiche Bedeutung besitzt und diese Gruppen $-SO_2-Z$ zu den Aminogruppen bevorzugt jeweils meta-ständig zueinander orientiert sind und eben so bevorzugt jeweils in ortho- oder jeweils in para-Stellung zum Äthylendioxirest gebunden stehen, bei einer Temperatur zwischen 10 und 60° C, vorzugsweise zwischen 20 und 40° C, und bei einem pH-Wert zwischen 4 und 7, vorzugsweise zwischen 5 und 6, bevorzugt in wäßriger Phase, acyliert, oder daß man

d) eine Azoverbindung der allgemeinen Formel (8)

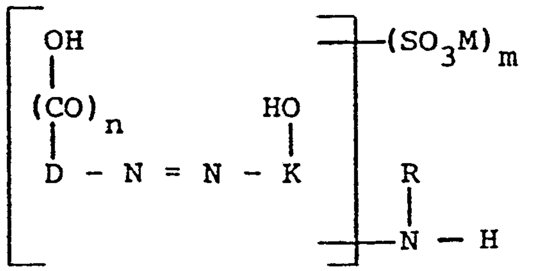

(8)

worin -K-OH, D, M, R, m und n die in Formel (1) genannten Bedeutungen haben, wobei die Aminogruppe -NHR an D oder K gebunden sein kann, in zweifach molarer Menge mit einer Bis-dihalogenotriazinylamino-Verbindung der allgemeinen Formel (9)

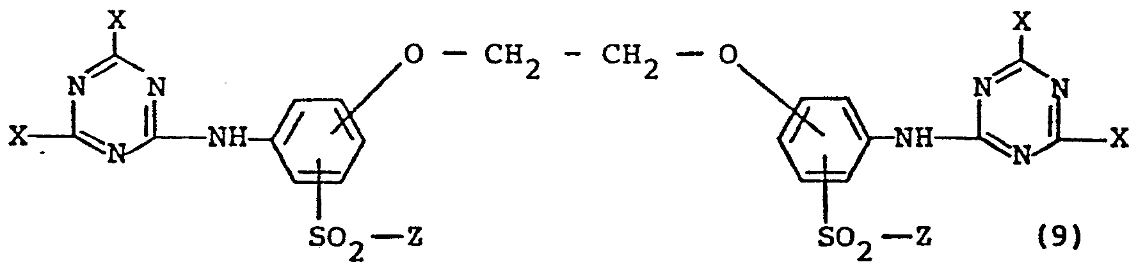

(9)

in welcher X und Z die obengenannten Bedeutungen besitzen und die beiden Gruppen $-SO_2-Z$ gleiche Bedeutungen haben und an den beiden Benzolkernen zu den Aminogruppen bevorzugt jeweils meta-ständig zueinander orientiert sind und ebenso bevorzugt zum Äthylendioxirest jeweils in ortho- oder jeweils in para-Stellung gebunden stehen, bei einer Temperatur zwischen 10 und 60° C, vorzugsweise zwischen 20 und 40° C, und bei einem pH-Wert zwischen 4 und 7, vorzugsweise zwischen 5 und 6, bevorzugt in wäßriger Phase, in Lösung oder in Suspension, acyliert,

und jeweils anschließend die so hergestellte metallfreie Azoverbindung der allgemeinen Formel (1) oder der allgemeinen Formel (10)

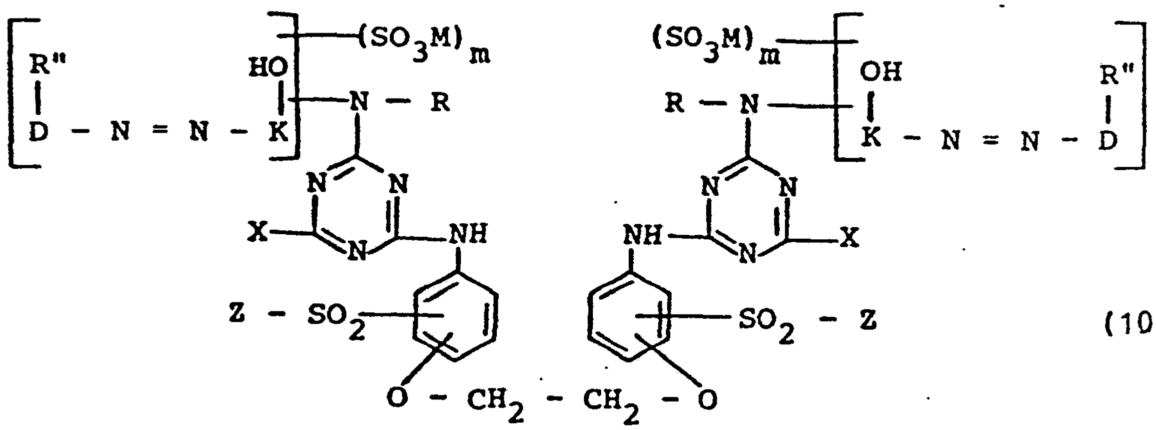

(10)

in welcher R'' ein Wasserstoffatom oder eine niedere Alkoxygruppe bedeutet und D der obengenannte Rest einer Diazokomponente der Benzol- oder Naphthalinreihe ist, an den die Triazinylaminogruppe und die angegebene(n) Sulfogruppe(n) gebunden sein können und der neben diesen Gruppen und der Gruppe R'', die an D in ortho-Stellung zur Azogruppe gebunden ist, noch weitere Substituenten, wie oben erwähnt, und/oder eine faserreaktive Gruppe, wie oben erwähnt, enthalten kann, wobei diese beiden Diazokomponenten gleich sind sowie -K-OH, M, m, und R und X sowie die beiden Gruppen $-SO_2-Z$ die für Formel (1) genannten Bedeutungen haben, entweder direkt in der Syntheselösung oder nach Zwischenisolierung, mit Hilfe eines schwermetallabgebenden Mittels analog bekannten und üblichen Verfahrensweisen in die erfindungsgemäßen Schwermetallkomplex-Azoverbindungen überführt, oder daß man

e) eine Schwermetallkomplexverbindung, vorzugsweise 1:1-Kupferkomplex-, 1:2-Chromkomplex- oder 1:2-Kobaltkomplex-Azoverbindung, einer Verbindung der obenge: nannten und definierten allgemeinen Formel (8) in äquimolarer Menge mit Cyanurchlorid oder Cyanurflourid monoacyliert und die Dihalogeno-s-triazinylamino-Verbindung sodann in zweifach molarer Menge mit einer Diaminoverbindung der oben angegebenen und definierten allgemeinen Formel (7) umsetzt, oder daß man

f) eine Schwermetallkomplexverbindung einer Verbindung der obengenannten und definierten allgemeinen Formel (8) in zweifach molarer Menge mit einer Verbindung der obengenannten und definierten allgemeinen Formel (9) acyliert.

Die bei dieser erfindungsgemäßen Verfahrensvariante e) durchgeführten Umsetzungen mit Cyanurchlorid oder Cyanurfluorid erfolgen analog bekannten Verfahrensweisen solcher Acylierungsreaktionen von Aminoverbindungen mit Halogentriazinen, beispielsweise in wäßrigem oder wäßrig-organischem Medium, beispielsweise unter Verwendung von Aceton, Glykoldimethyläther, Glykoldiäthyläther, Tetrahydrofuran oder Dioxan als organischem Lösemittel und bevorzugt bei einer Temperatur zwischen 5 und 30°C, insbesondere zwischen 10 und 20°C, und bevorzugt bei einem pH-Wert zwischen 2,0 und 6,0, insbesondere zwischen 3,0 und 5,0.

Die anschließende Umsetzung dieser Dihalogenotriazinylamino-Schwermetallkomplexazoverbindungen mit der halbmolaren Menge der Diaminoverbindung der allgemeinen Formel (7) erfolgt ebenso in wäßrigem oder wäßrig-organischem Medium, bevorzugt in wäßrigem Medium, analog bekannten und üblichen Verfahrensweisen solcher Acylierungsreaktionen, bevorzugt bei einer Temperatur zwischen 5 und 60°C, insbesondere zwischen 15 und 50°C, und bevorzugt bei einem pH-Wert zwischen 3,5 und 6,5, insbesondere zwischen 5,0 und 6,0.

Die Acylierungsreaktion f) der Schwermetallkomplexverbindungen mit den Halogenotriazinylamino-Verbindungen der allgemeinen Formel (9) kann ebenso, analog bekannten Verfahrensweisen, in wäßrigem oder wäßrig-organischem Medium durchgeführt werden; bevorzugt arbeitet man bei einer Temperatur zwischen 10 und 60°C, insbesondere zwischen 20 und 50°C und bevorzugt bei einem pH-Wert zwischen 4 und 7, insbesondere zwischen 5,0 und 6,0.

Die Diazotierungsreaktionen und Kupplungsreaktionen, die in den Verfahrensvarianten a) und b) durchgeführt werden, erfolgen ebenfalls analog bekannten Verfahrensweisen der Diazotierung (Tetrazotierung) und Kupplung, die zahlreich aus der Literatur bekannt sind; sie können in wäßrigem oder wäßrig-organischem Medium, vorzugsweise in wäßrigem Medium, durchgeführt werden. Die Kupplungsreaktionen führt man beispielsweise bei einer Temperatur zwischen 0 und 40°C, vorzugsweise zwischen 10 und 20°C, und bei einem pH-Wert zwischen 3 und 8, vorzugsweise zwischen 5 und 6,5, aus.

Schwermetallabgebende Mittel, vorzugsweise kupfer-, chromund kobaltabgebende Mittel, sind insbesondere die Salze dieser Schwermetalle, von den kupfer(I)-, kobalt(II)- und chrom(III)-abgebenden Mitteln beispielsweise Kupfersulfat, Kupferacetat, basisches Kupfercarbonat, Kobaltsulfat, Kobaltchlorid, Kobaltcarbonat, Chromacetat, Chromkaliumsulfat, Chromchlorid und Chromfluorid.

Die erfindungsgemäße Überführung der metallfreien Azoverbindungen der allgemeinen Formel (1) in die erfindungsgemäßen Schwermetallkomplexverbindungen mit den schwermetallabgebenden Mitteln erfolgt analog bekannter Verfahrensweise in wäßrig-organischem, bevorzugt wäßrigem Medium, beispielsweise bei

einer Temperatur zwischen 25 und 100°C, vorzugsweise zwischen 50 und 95°C, und bei einem pH-Wert zwischen 4 und 7, vorzugsweise zwischen 5 und 6,5. Bei der Verwendung von Schwermetallsalzen mit Anionen starker Mineralsäuren als schwermetallabgebenden Mitteln muß während der Metallisierungsreaktion ein säurebindendes Mittel, die hierfür üblich sind, wie beispielsweise Alkalicarbonate, Alkalihydrogencarbonate, Alkalihydroxide oder Alkaliacetate, zugegeben werden, um den pH-Wert im angegebenen Bereich zu halten.

Die erfindungsgemäßen 1:1-Kupferkomplexverbindungen mit n gleich Null lassen sich auch in der Weise herstellen, indem man eine metallfreie Azoverbindung der oben angegebenen und definierten allgemeinen Formel (10) oxidierend (bei R'' gleich Wasserstoff) oder entalkylierend (bei R'' gleich niederes Alkoxy) mit einem kupferabgebenden Mittel umsetzt. Diese oxidierenden und entalkylierenden Kupferungsreaktionen werden analog den in der Literatur bekannten Verfahrensweisen durchgeführt. Bei der entalkylierenden Kupferung setzt man die entsprechende Verbindung der allgemeinen Formel (10) mit R'' gleich einer niederen Alkoxygruppe, bevorzugt Methoxygruppe,mit dem Kupfersalz bei einer Temperatur oberhalb von 70°C, wie beispielsweise 70 bis 110°C, ggf. unter Druck, vorzugsweise zwischen 90 und 95°C, um. Die oxidierende Kupferung wird mittels der Kupfersalze als kupferabgebende Mittel, beispielsweise in Gegenwart von Wasserstoffperoxid und bei einer Temperatur zwischen 10 und 40°C, vorzugsweise zwischen 15 und 30°C, und bei einem pH-Wert zwischen 4,5 und 5,5, durchgeführt.

Die bisher nicht bekannten Diaminoverbindungen der allgemeinen Formel (7) lassen sich herstellen, indem man von einem Äthylenglykol-bisanilin-äther ausgeht und diesen analog bekannten Verfahrensweisen zur N,N'-Bis-acetyl-Verbindung acetyliert, in diese wiederum mittels Chlorsulfonsäure und Thionylchlorid, wie z.B. in Houben-Weyl, Methoden der Organischem Chemie, Band IX, S. 578 (1955) beschrieben, vorzugsweise bei einer Temperatur zwischen 40 und 100°C, in die beiden Benzolkerne jeweils eine Sulfochloridgruppe einführt, diese Sulfochloridgruppen mit Alkalisulfit, insbesondere Natriumsulfit in Gegenwart von Alkalihydroxid in wäßriger Lösung bei einer Temperatur zwischen 0 und 60°C und einem pH-Wert zwischen 7 und 10 zu den Sulfinsäuren reduziert, diese wiederum mit Äthylenoxid in Gegenwart von wäßriger Schwefelsäure oder mit Äthylenchlorhydrin,beispielsweise analog dem in der belgischen Patentschrift 747 418 beschriebenen Verfahren, zu den β-Hydroxyäthylsulfonyl-Verbindungen oxäthyliert und diese anschließend mittels einer anorganischen Säure entacetyliert. Diese so erhaltenen Diaminoverbindungen mit den β-Hydroxyäthylsulfonyl-Gruppen entsprechen somit den Verbindungen der allgemeinen Formel (7), in welcher jedoch hier der Formelrest Z die β-Hydroxyäthyl-Gruppe ist. Diese β-Hydroxyäthylsulfonyl-Gruppenkönnen analog bekannten Verfahrensweisen in die Gruppen $-SO_2-Z$ mit Z den für Formel (1) genannten Bedeutungen übergeführt werden, beispielsweise durch Veresterung mit einem Sulfatierungsmittel in die entsprechenden β-Sulfatoäthylsulfonyl-Gruppen.

Die als Ausgangsverbindungen dienenden Bis-dihalogenotriazinylamino-Verbindungen der allgemeinen Formel (9) lassen sich analog solchen, bekannten Acylierungsreaktionen durch Acylierung der Diaminoverbindungen der allgemeinen Formel (7) mit Cyanurchlorid oder Cyanurfluorid, vorzugsweise in wäßriger Lösung oder Suspension bei einer Temperatur zwischen -10°C und +20°C, vorzugsweise zwischen -5°C und +10°C, und bei einem pH-Wert zwischen 1,5 und 5,0, vorzugsweise 2,0 und 2,5, synthetisieren.

Ebenso lassen sich analog bekannten Verfahrensweisen der Acylierung von Aminoverbindungen mit Trihalogenotriazinen oder mit Dihalogenotriazinylaminoverbindungen die Verbindungen der allgemeinen Formeln (3) und (4) aus deren entsprechenden Amino- und Halogenotriazin-Komponenten herstellen, so die Verbindungen der allgemeinen Formel (3) beispielsweise durch Umsetzung der entsprechenden Kupplungskomponente, die die Aminogruppe -NHR enthält, mit der Bis-dihalogenotriazinylamino-Verbindung der allgemeinen Formel (8) in wäßrigem oder wäßrig-organischem Medium bei einer Temperatur zwischen 15°C und 80°C und bei einem pH-Wert zwischen 4 und 7 und die Verbindungen der allgemeinen Formel (4) beispielsweise durch Umsetzung einer entsprechenden Phenylen-diamino- oder Diamino-naphthalin-Verbindung mit einer Verbindung der allgemeinen Formel (9) in wäßriger oder wäßrig-organischer Phase bei einer Temperatur zwischen 15°C und 80°C und bei einem pH-Wert zwischen 4 und 7.

Die als Ausgangsverbindungen dienenden Diazokomponenten entsprechend der allgemeinen Formel (2) sind vorzugsweise 2-Aminophenol-, 2-Aminonaphthol-, 2-Amino-alkoxybenzol-, 2-Aminobenzoesäure-, Anilin-, 1-Naphthylamin- und 2-Naphthylamin-Verbindungen, die weitere Substituenten, wie oben erwähnt, und/oder eine faserreaktive Gruppe, wie oben erwähnt, enthalten können. Verbindungen entsprechend der allgemeinen Formel (2) sind beispielsweise 2-Aminophenol-4-sulfonsäure, 2-Aminophenol-5-sulfonsäure, 2-Amino-4-chlor-phenol-5-sulfonsäure, 2-Aminophenol-4,6-disulfon-säure, 2-Aminophenol-4-β-sulfatoäthylsulfon, 2-Aminophenol-5-β-sulfatoäthylsulfon, 2-Amino-4-chlor-phenol-5-β-sulfato-äthylsulfon, 2-Aminophenol-4-vinylsulfon-6-sulfonsäure, 2-Aminophenol-4-vinylsulfon, 2-Aminophenol-4-β-sulfato-äthylsulfon-6-sulfonsäure, 2-Amino-4-methyl-phenol, 2-Amino-4-methyl-phenol-5-β-sulfatoäthylsulfon, 2-Amino-4-methoxy-phenol-5-β-sulfatoäthylsulfon, 2-Amino-4-methoxyphenol, 2-Amino-4-β-sulfatoäthylsulfonyl-benzoesäure, 2-Amino-benzoesäure, 4-Nitro-2-amino-phenol-6-sulfonsäure, 2,4-Diaminophenol-6-sulfonsäure, 2-Aminophenol-4-sulfonamid, 2-Aminophenol-4-carbonsäure, 2-Amino-benzoesäure-5-sulfon-säure, 2,5-Diaminophenol, 6-Nitro-1-diazo-2-naphthol-4-sulfonsäure, 2-Naphthylamin-4,8-disulfonsäure, 2,5-Dimeth-oxy-anilin, 2-Methoxy-5-methyl-anilin, 2-Naphthylamin-6-β-sulfatoäthylsulfon, 2-Naphthylamin-5-sulfonsäure, 2-Naphthyl-amin-6-sulfonsäure, 2-Amino-anisol-4-sulfonsäure, 2-Amino-anisol-5-sulfonsäure, 2-Amino-4-methyl-anisol-5-β-sulfato-äthylsulfon, 2-Amino-1,4-dimethoxy-benzol-5-β-sulfatoäthyl-sulfon, 1-Amino-2-methoxy-naphthalin-6-sulfonsäure, 1-Amino-2-äthoxy-naphthalin-6-sulfonsäure, 4-Chlor-2-amino-anisol, 4-Chlor-2-amino-anisol-6-sulfonsäure, Anilin-3-sulfonsäure, Aminobenzol-3-β-sulfatoäthylsulfon.

Kupplungskomponenten der allgemeinen Formel (5), die als Ausgangsverbindungen dienen können, sind

beispielsweise die Naphthole und Naphtholsulfonsäuren,wie 1-Naphthol-4-sulfon-säure, 1-Naphthol-5-sulfonsäure, 1-Naphthol-3,6- und -4,6-disulfonsäure, 2-Naphthol-5-sulfonsäure, 2-Naphthol-6-sulfonsäure, 2-Naphthol-3,6-disulfonsäure und 2-Naphthol-4,8-disulfonsäure, ebenso die Naphthole, die eine Aminogruppe der Formel -NHR mit R der obengenannten Bedeutung enthalten, wie beispielsweise die 2-Amino-8-naphthol-6-sulfonsäure, 2-Amino-5-naphthol-7-sulfonsäure, 2-Methyl-amino-8-naphthol-6-sulfonsäure, 2-Methylamino-5-naphthol-7-sulfonsäure, 2-Amino-8-naphthol-6-sulfonsäure, 1-Amino-8-naphthol-4-sulfonsäure, 1-Amino-8-naphthol-2,4-disulfon-säure, 1-Amino-8-naphthol-3,6-disulfonsäure und 1-Amino-8-naphthol-4,6-disulfonsäure, weiterhin Pyrazolonverbindungen die im Arylrest die Aminogruppe -NHR enthalten können, wie beispielsweise 1-(3'-Aminophenyl)-3-methyl-pyrazol-5-on, 1-(4'-Aminophenyl)-3-methyl-pyrazol-5-on, 1-(3'-Aminophe-nyl)-3-carboxy-pyrazol-5-on, 1-(4'-Aminophenyl)-3-carboxy-pyrazol-5-on, 1-(3'-Amino-6'-sulfo-phenyl)-3-methyl-pyrazol-5-on, 1-(3'-Amino-6'-sulfo-phenyl)-3-carboxy-pyrazol-5-on, 1-(4'-Amino-6'-sulfo-phenyl)-3-methyl-oder-3-carboxy-pyrazol-5-on, 1-(4'-Sulfophenyl)-3-methyl-pyrazol-5-on, 1-(4'-Sulfophenyl)-3-carboxy-pyrazol-5-on, 1-(3'-Sulfo-phenyl)-3-methyl- oder -3-carboxy-pyrazol-5-on, 1-(2',5'-Dichlor-4'-sulfo-phenyl)-3-methyl-pyrazol-5-on, 1-(3'-Methyl-phenyl)-3-methyl-pyrazol-5-on, 1-(3'-Methyl-phenyl)-3-carb-oxy-pyrazol-5-on, 1-(4'-Methyl-phenyl)-3-methyl- oder -3-carboxypyrazol-5-on, 1-(4'-β-Sulfatoäthylsulfonyl-phenyl)-3-methyl- oder -3-carboxy-pyrazol-5-on, 1-(3'-β-Sulfatoäthylsulfonyl-phenyl)-3-methyl- oder -3-carboxy-pyrazol-5-on, 1-(5'-Sulfo-naphth-2'-yl)-3-methyl- oder -3-carboxy-pyrazol-5-on, 1-(4',8'-Disulfo-naphth-2'-yl)-3-methyl- oder -3-carboxy-pyrazol-5-on, 1-(6'-β-Sulfato-äthylsulfonyl-naphth-2'-yl)-3-methyl- oder -3-carboxy-pyrazol-5-on, ebenso beispielsweise deren 3-Carbomethoxy-und 3-Carbäthoxy-Derivate, weiterhin von den Acetessigsäurearyliden beispielsweise N-Acetoäcetyl-2-methoxy-5-methyl-anilin-4-sulfonsäure, N-Acetoacetyl-2,5-dimethoxy-anilin-4-sulfonsäure, N-Acetoacetyl-4-amino-anilin-3-sulfonsäure, N-Acetoacetyl-3-amino-anilin-4-sulfonsäure, N-Acetoacetyl-2-methoxy-5-methyl-anilin-4-β-sulfatoäthylsulfon und N-Acetoacetyl-2,5-dimethoxy-anilin-4-β-sulfatoäthylsulfon, 1-Naphthol-4-β-sulfatoäthylsulfon, 2-Naphthol-5-β-sulfato-äthylsulfon oder 2-Naphthol-6-β-sulfatoäthylsulfon.

Von den erfindungsgemäßen Schwermetallkomplexverbindungen, insbesondere 1:1-Kupfer-,1:2-Chrom- und 1:2-Kobaltkomplex-verbindungen, einer Azoverbindung der allgemeinen Formel (1) sind insbesondere diejenigen hervorzuheben, in denen der Formelrest D den Benzolkern bedeutet, der neben der metallkomplexbildenden Carboxygruppe, bevorzugt Hydroxygruppe (und der Azogruppe) keinen weiteren Substituenten enthält oder noch durch einen oder zwei Substituenten substituiert ist, die aus der Gruppe: 2 Methylgruppen, 2 Äthylgruppen, 2 Methoxygruppen, 2 Äthoxygruppen, 1 Nitrogruppe, 1 Carboxygruppe, 1 Sulfamoylgruppe, 1 Carbamoylgruppe, 2 Chloratome, 1 Bromatom, 2 der in Formel (1) angegebenen Sulfogruppen und 1 Gruppe der oben definierten Formel $-SO_2-Z$, hiervon bevorzugt die β-Sulfatoäthylsulfonyl-Gruppe, - ausgewählt sind, oder in denen der Formelrest D den Naphthalinkern bedeutet, der neben der metallkomplexbildenden Hydroxygruppe (und der Azogruppe) keinen weiteren Substituenten enthält oder noch durch eine niedere Alkanoylaminogruppe oder Benzoylaminogruppe und/oder eine oder zwei der in Formel (1) angegebenen Sulfogruppen substituiert ist, weiterhin solche, in denen K ein Naphthalinrest ist, in welchem die Hydroxygruppe in ortho-Stellung zur Azogruppe gebunden ist und der neben diesen beiden Gruppen noch durch den in Formel (1) angegebenen Halogentriazinylaminorest und durch eine oder zwei der in Formel (1) angegebenen Sulfogruppen substituiert ist, oder in denen der Formelrest K einen Rest der allgemeinen Formel (11) oder der allgemeinen Formel (12)

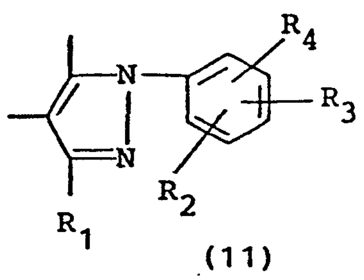
(11)

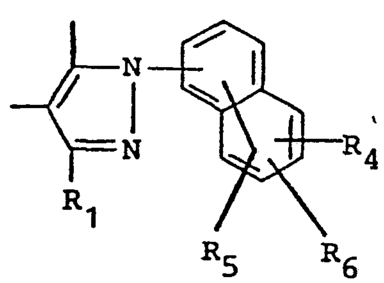
(12)

darstellt, in welchen $R_1$ für die Methylgruppe oder die Carboxygruppe steht, $R_2$ ein Wasserstoffatom, eine Methyl-, Äthyl-, Methoxy-, Äthoxy-, Carboxy- oder Nitrogruppe oder eine der in Formel (1) angegebenen Sulfogruppen oder ein Chlor- oder Bromatom ist, $R_3$ ein Wasserstoffatom oder ein Chloratom oder eine Methyl-, Äthyl-, Methoxy- oder Äthoxygruppe oder eine der in Formel (1) angegebenen Sulfogruppen bedeutet, $R_4$ der in Formel (1) angegebene Halogentriazinylaminorest ist, $R_5$ ein Wasserstoffatom oder eine Sulfogruppe darstellt und $R_6$ eine Sulfogruppe bedeutet, oder in denen der Formelrest K einen Rest der allgemeinen Formel (13) oder (14)

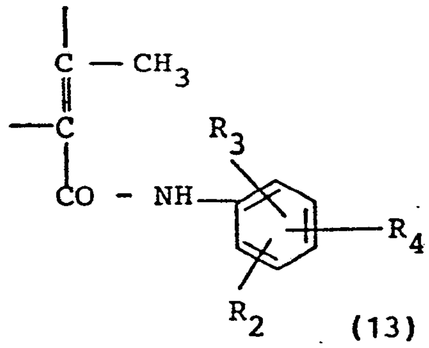 (13)

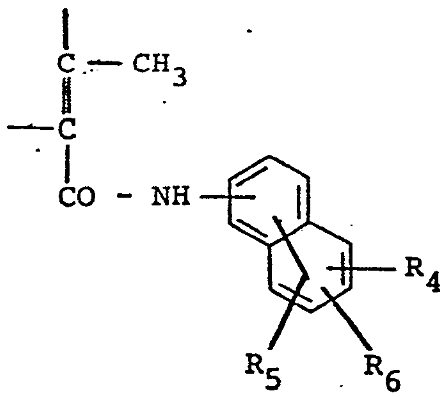 (14)

darstellt, in welchen $R_2$, $R_3$, $R_4$, $R_5$ und $R_6$ die obengenannten Bedeutungen haben.

Die Abscheidung und Isolierung der erfindungsgemäß hergestellten Schwermetallkomplexverbindungen aus den Syntheselösungen kann nach allgemein bekannten Methoden erfolgen, so beispielsweise entweder durch Ausfällen aus dem Reaktionsmedium mittels Elektrolyten, wie beipielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Schwermetallkomplexverbindungen haben faserreaktive Eigenschaften und besitzen sehr gute Farbstoffeigenschaften. Sie können deshalb zum Färben und Bedrucken von hydroxy- und/oder carbonamidgruppenhaltigen Materialien, insbesondere Fasermaterialien, verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden. Auf den genannten Materialien lassen sie sich bevorzugt nach den für faserreaktive Farbstoffe üblichen und bekannten Anwendungsverfahren applizieren und echt fixieren.

Gegenstand der vorliegenden Erfindung ist somit auch die Verwendung der erfindungsgemäßen Schwermetallkomplexverbindungen als Farbstoffe, insbesondere zum Färben und Bedrucken von hydroxy- und/oder carbonamidgruppenhaltigen Materialien, bevorzugt in Form von Fasermaterialien, insbesondere in Form von Textilfasern, wie Garnen, Wickelkörpern und Geweben, bzw. Verfahren zur Anwendung der erfindungsgemäßen Schwermetallkomplexverbindungen auf diesen Substraten. Hierbei kann man analog bekannten Verfahrensweisen vorgehen, indem man die erfindungsgemäßen Schwermetallkomplexverbindungen in gelöster Form auf das Substrat aufbringt und sie, gegebenenfalls durch Hitzeeinwirkung und/oder gegebenenfalls durch Einwirkung eines alkalisch wirkenden Mittels, darauf fixiert.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4, sowie Leder.

Die erfindungsgemäßen Schwermetallkomplexverbindungen lassen sich auf den genannten Substraten, insbesondere auf den genannten Fasermaterialien, nach den für wasserlösliche Schwermetallkomplexfarbstoffe -insbesondere solchen mit faserreaktiven Eigenschaften -bekannten Anwendungstechniken applizieren und fixieren. Solche Färbe- und Fixierweisen sind in der Literatur zahlreich beschrieben.

Beispielsweise erhält man mit den erfindungsgemäßen Schwermetallkomplexverbindungen auf Cellulosefasern nach dem Ausziehverfahren unter Verwendung von alkalischen Mitteln unterschiedlicher Art aus langer Flotte Färbungen mit sehr guter Farbausbeute. Mit ebenfalls ausgezeichneten Farbausbeuten erhält man auf Cellulosefasern Färbungen nach den bekannten Klotzverfahren, wobei die erfindungsgemäßen Schwermetallkomplexverbindungen mittels Alkali durch Verweilen bei Raumtemperatur, durch Dämpfen oder mit Trockenhitze fixiert werden können.

Bei den Druckverfahren können ebenfalls die üblichen einphasigen Verfahren in Anwesenheit eines säurebindenden Mittels oder alkalispendenden Mittels, wie beispielsweise Natriumbicarbonat, Natriumcarbonat und Natriumtrichloracetat, in der Druckpaste mit anschließendem Fixieren durch Dämpfen, beispielsweise bei 100 bis 103°C, oder die zweiphasigen Verfahren unter Verwendung neutraler oder schwach saurer Druckpasten, nach deren Druck das Fasermaterial entweder durch ein heißes elektrolythaltiges alkalisches Bad geführt oder aber mit einer alkalischen elektrolythaltigen Klotzflotte überklotzt und die erfindungsgemäßen Schwermetallkomplexverbindungen danach durch Dämpfen oder Trockenhitze fixiert werden, verwendet werden.

Man erhält mit diesen Verfahren farbstarke Drucke mit gutem Siand der Strukturen und einem klaren Weißfond. Die Qualität der Drucke wird von wechselnden Fixierbedingungen praktisch nicht beeinflußt und die Drucke zeigen somit eine befriedigende Nuancenkonstanz.

Die mit den erfindungsgemäßen Schwermetallkomplexverbindungen erhältlichen Färbungen und Drucke auf Cellulosefasermaterialien besitzen sehr gute Echtheiten; hiervon sind insbesondere die wichtigsten Fabrikations- und Gebrauchsechtheiten hervorzuheben, wie die Lichtechtheit, die Waschechtheit, beispielsweise bei 60 oder 95°C, die saure und alkalische Walkechtheit, die Wasserechtheit, die Seewasserechtheit, die saure Überfärbeechtheit, die alkalische und saure Schweißechtheit sowie die Plissier-, Bügelund Reibechtheiten.

Sowohl die natürlichen als auch die synthetischen Polyamidfasermaterialien werden mit den erfindungsgemäßen Schwermetallkomplexverbindungen bevorzugt aus saurem, wäßrigem Färbebad oder saurer, wäßriger Färbeflotte gefärbt. Vorzugsweise wird der gewünschte pH-Wert des Färbebades oder der Färbeflotte mit Essigsäure oder Essigsäure und Ammoniumacetat oder Natriumacetat eingestellt. Um eine gute Egalität der Färbungen zu erreichen oder deren Egalität zu verbessern, ist es vorteilhaft, übliche Egalisierhilfsmittel, beispielsweise Verbindungen auf Basis eines Umsetzungsproduktes von einem Fettamin, wie beispielsweise Stearylamin, mit einem Alkylenoxid, wie Äthylenoxid, und/oder eines Umsetzungsproduktes von Cyanurchlorid mit der etwa dreifach molaren Menge einer Aminobenzolsulfonsäure und/oder einer Aminonaphthalinsulfonsäure, im Färbebad oder in der Färbeflotte zu verwenden. Die Färbungen können üblicherweise bei einer Temperatur zwischen 60 und 105°C, vorzugsweise im Ausziehverfahren, insbesondere bei Siedetemperatur des Färbebades, oder auch in einem Druckfärbeapparat bei einer Temperatur bis zu 120°C ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

**Beispiel 1**

a) 2-Aminophenol-4-sulfonsäure (18,9 Teile) werden in üblicher Weise diazotiert und sodann auf eine als Kupplungskomponente dienende Verbindung (34,9 Teile) der Formel

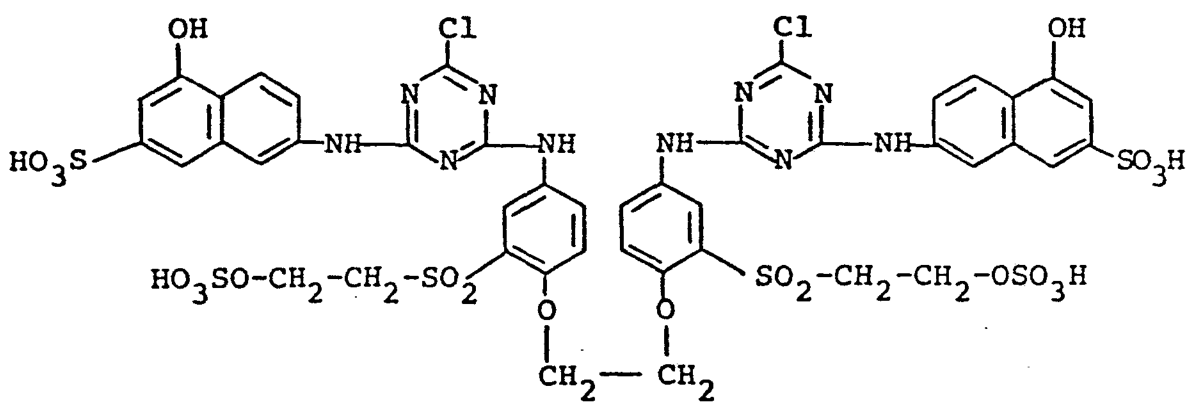

zweifach gekuppelt; die Kupplungsreaktion erfolgt bei einem pH-Wert von 6,8 bis 7,2, der bis zum Ende der Reaktion mit Natriumcarbonat in diesem Bereich gehalten wird.

b) Die unter a) verwendete Kupplungskomponente kann wie folgt hergestellt werden: Eine wäßrige Lösung mit einem pH-Wert von 3,5 von 38,7 Teilen 2-(4',6'-Dichlor-s-triazin-2'-yl-amino)-5-naphthol-7-sulfonsäure wird bei 10 bis 15°C zu einer neutralen Lösung von 31,1 Teilen Äthylenglykol-bis-(4-amino-2-β-sulfatoäthylsulfonyl-phenyl)-äther in 150 Teilen Wasser gegeben. Das Reaktionsgemisch wird mit Natriumcarbonat während der Acylierungsreaktion bei einem pH-Wert von 6,0 gehalten. Das so hergestellte Acylierungsprodukt wird mit Natriumchlorid ausgesalzen, abfiltriert und mit einer wäßrigen Natriumchloridlösung gewaschen.

c) Zu der unter a) hergestellten Lösung der Disazoverbindung gibt man zwecks Synthese der erfindungsgemäßen Kupferkomplexverbindung 22,2 Teile basisches Kupfercarbonat; das Reaktionsgemisch wird unter Rühren auf 60°C erhitzt und eine Stunde bei dieser Temperatur gehalten und sodann filtriert. Aus dem Filtrat wird die erfindungsgemäße Kupferkomplexdisazoverbindung in üblicher Weise, beispielsweise durch Aussalzen mit Natriumchlorid, abgeschieden. Nach Trocknen und Vermahlen erhält man ein dunkelbraunes Pulver, das neben Elektrolytsalzen das Natriumsalz der Verbindung der Formel

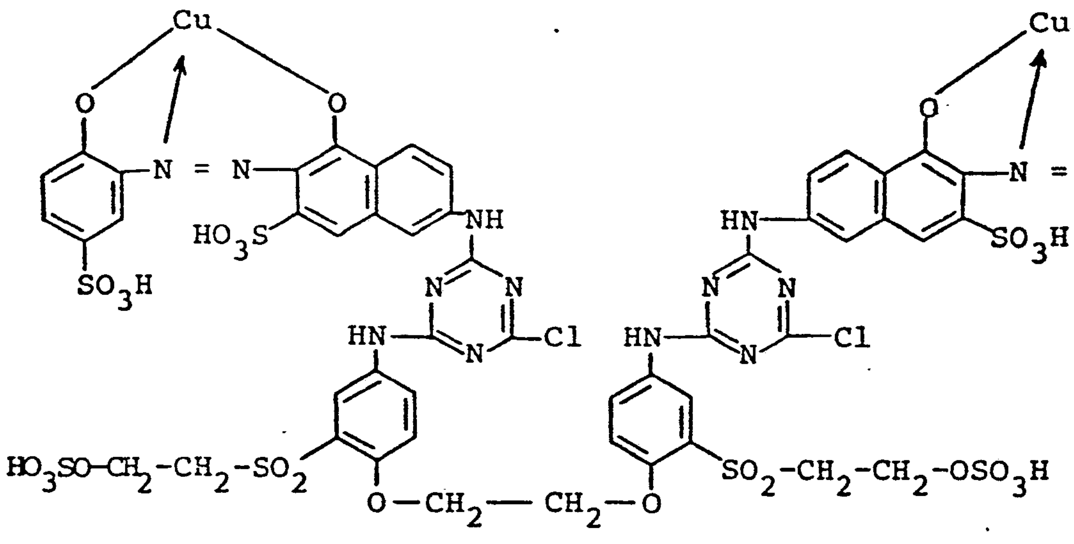

enthält. Diese besitzt sehr gute Farbstoffeigenschaften und färbt die in der Beschreibung genannten Materialien, insbesondere Cellulosefasermaterialien, wie Baumwolle, beispielsweise aus wäßrigem Färbebad in Gegenwart von Natriumbicarbonat, Natriumcarbonat oder Natronlauge,in rubinroter Nuance mit sehr guten Naßechtheitseigenschaften und sehr guter Lichtechtheit der erhaltenen Färbung. Dieser erfindungsgemäße Farbstoff läßt sich nach allgemein in der Technik üblichen Applikations- und Fixiermethoden auf Cellulosefasermaterialien fixieren, so daß echte Drucke und Färbungen von kräftiger rubinroter Nuance erhalten werden.

**Beispiel 2**

Man verfährt zur Herstellung einer erfindungsgemäßen Kobaltkomplexverbindung gemäß der Verfahrensweise des Beispieles 1, setzt jedoch zur Metallisierungsreaktion anstelle von Kupfercarbonat 14 Teile basisches Kobaltcarbonat ein, setzt 15 Teile kristallines Natriumacetat hinzu und führt die Metallisierung unter Rühren bei 75° C während 3 Stunden durch. Nach Isolierung auf übliche Weise erhält man das Alkalimetallsalz, wie Natriumsalz, der Verbindung der Formel

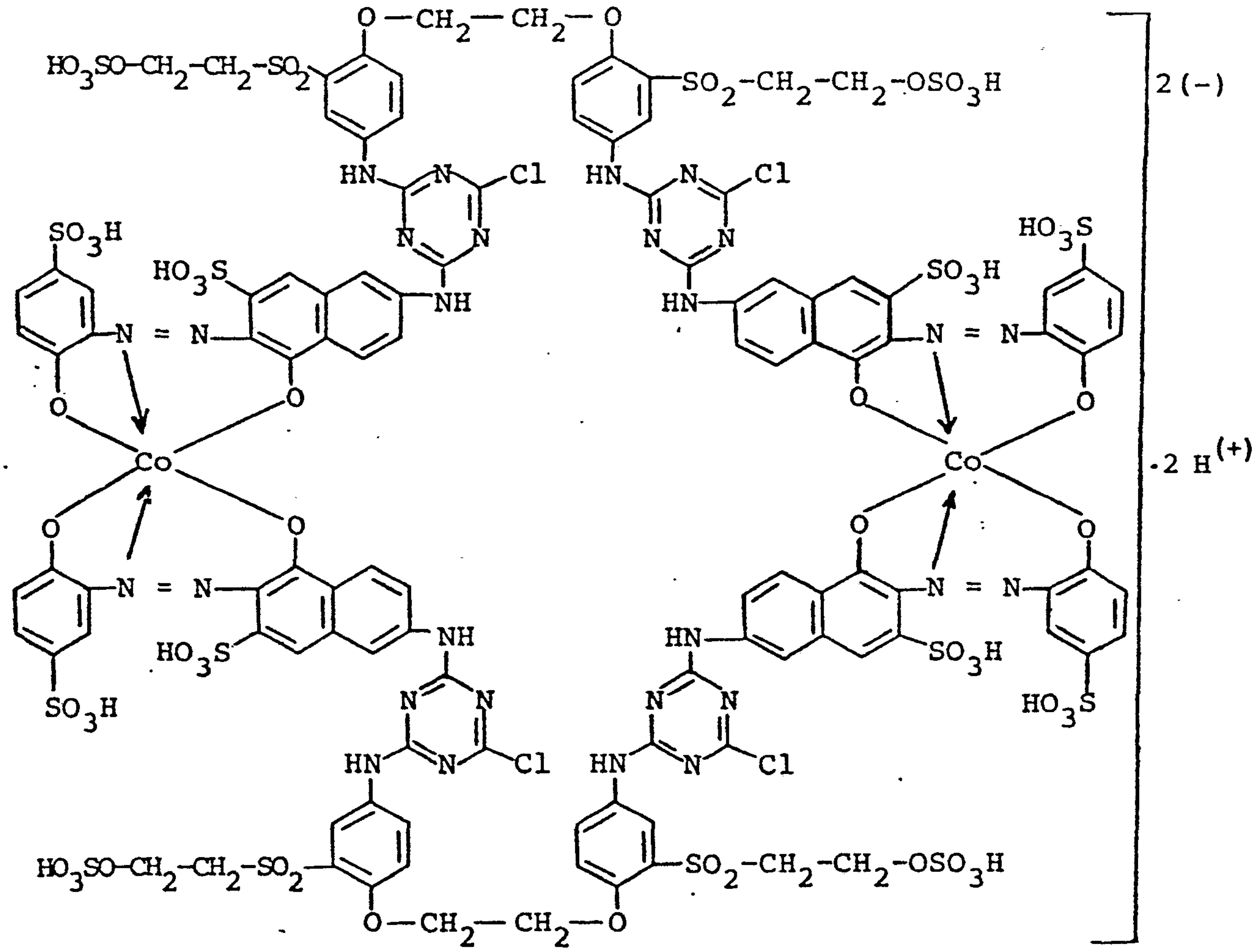

Diese besitzt sehr gute faserreaktive Farbstoffeigenschaften und liefert beispielsweise auf Cellulosefasermaterialien, wie Baumwolle oder Regeneratcellulose, nach den in der Technik üblichen Applikations- und Fixiermethoden, beispielsweise in Gegenwart von Natriumbicarbonat oder Natriumcarbonat, bordorote Färbungen und Drucke mit sehr guten Naßechtheiten und einer sehr guten Lichtechtheit.

**Beispiel 3**

29,7 Teile 2-Aminophenol-4-β-sulfatoäthylsulfon werden in 150 Teilen Eis mit 25 Teilen einer 31 %igen wäßrigen Salzsäure 2 Stunden verrührt. Sodann gibt man 50 Teile Eis hinzu und diazotiert mit 20 Volumenteilen einer wäßrigen 5n-Natriumnitritlösung. Zu dieser Diazoniumsalzsuspension gibt man 40,2 Teile der zweifach ankuppelbaren Verbindung der Formel

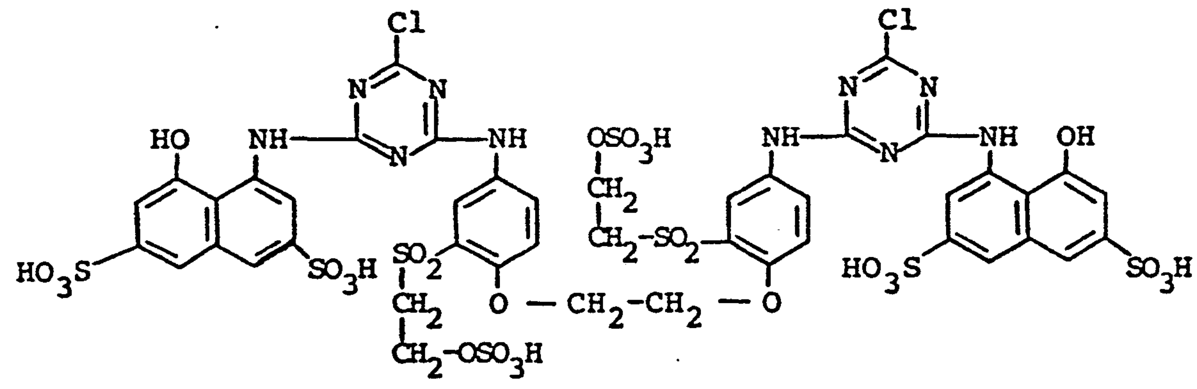

die analog der im Beispiel 1 b) beschriebenen Verfahrensweise hergestellt werden kann. Die Kupplungsreaktion wird bei einem pH-Wert von 6,8 bis 7,2 durchgeführt und der pH innerhalb dieses Bereiches bis zur Beendigung der Reaktion durch Zugabe von Natriumcarbonat gehalten.

Zur Überführung dieser metallfreien Disazoverbindung in die erfindungsgemäße Kupferkomplexverbindung versetzt man diese Kupplungslösung anschließend mit 22,2 Teilen basischem Kupfercarbonat. Man erhitzt unter Rühren auf 60° C und hält die Temperatur eine Stunde, klärt sodann durch Filtration und salzt die gebildete Kupferkomplexverbindung mit Natriumchlorid aus.

Es wird ein braunes Pulver erhalten, das neben anorganischen Elektrolytsalzen (vorwiegend Natriumchlorid) das Natriumsalz der Verbindung der Formel

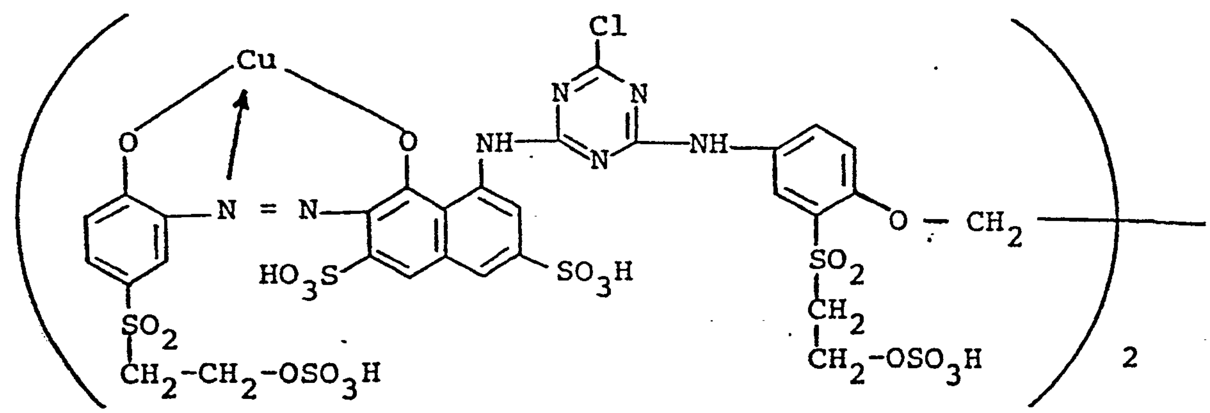

enthält. Diese besitzt sehr gute faserreaktive Farbstoffeigenschaften und färbt beispielsweise Baumwolle oder Zellwolle aus wäßrigem Färbebad in Gegenwart von Alkali, wie Natriumbicarbonat, Natriumcarbonat oder Natronlauge, in rotvioletten Tönen; die Färbungen besitzen sehr gute Nassechtheiten und eine sehr gute Lichtechtheit. Die Fixierausbeute ist hoch.

**Beispiel 4**

Eine neutrale wäßrige Lösung von 30,3 Teilen 2-Naphthyl-amin-4,8-disulfonsäure in 200 Teilen Wasser wird mit 20 Volumenteilen einer wäßrigen 5n-Natriumnitritlösung vermischt und langsam zu 150 Teilen Eis und 40 Teilen 31-%iger Salzsäure unter Rühren einlaufen lassen. Nach Beendigung der Diazotierungsreaktion zersetzt man, wie üblich, den geringen Überschuß an salpetriger Säure mit wenig Amidosulfonsäure. Zur Kupplungsreaktion gibt man sodann 40,2 Tle. der im Beispiel 3 formelmäßig genannten Kupplungskomponente und stellt den pH-Wert mit Natriumcarbonat auf 6,0 ein. Nach Ende der Kupplungsreaktion wird die erhaltene dunkelrote Lösung mit einer Lösung von 25 Teilen kristallisiertem Kupfersulfat in 120 Teilen Wasser vermischt und hierzu langsam 17,5 %iges wäßriges Wasserstoffperoxid unter Konstanthaltung des pH-Wertes zwischen 4,8 und 5,2 mittels Natriumcarbonat zugegeben, bis die rote metallfreie Ausgangsdisazoverbindung quantitativ in die dunkelblaue erfindungsgemäße Kupferkomplexverbindung übergeführt ist. Die Lösung wird geklärt und die Kupferkomplexverbindung durch Zugabe von Natriumchlorid abgeschieden, abfiltriert, getrocknet und vermahlen. Es wird ein blaugraues, elektrolythaltiges Pulver mit dem Natriumsalz der Verbindung der Formel

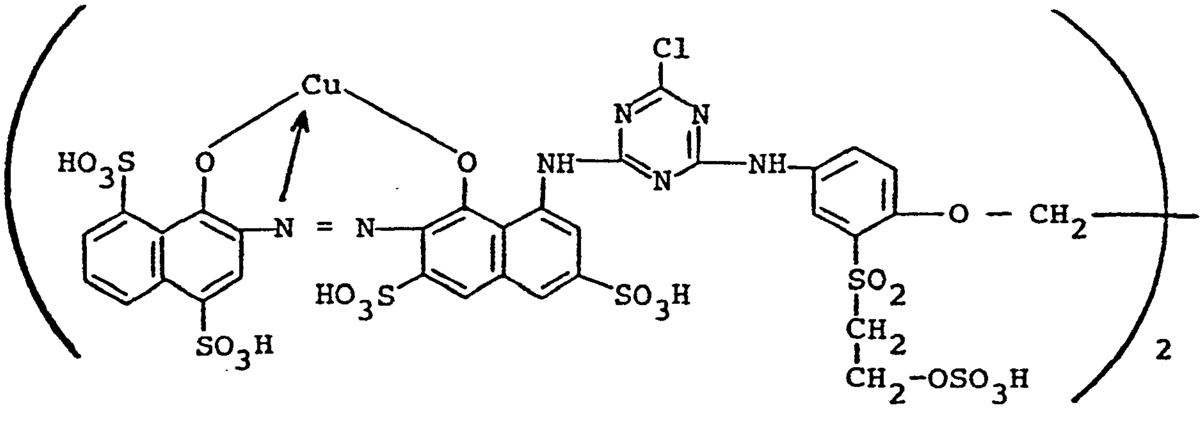

erhalten. Diese zeigt sehr gute faserreaktive Farbstoff eigenschaften und liefert auf den in der Beschreibung genannten Materialien, wie insbesondere Cellulosefasermaterialien, beispielsweise Baumwolle und Zellwolle, nach den in der Technik üblichen Applikations- und Fixiermethoden für faserreaktive Farbstoffe, beispielsweise aus wäßrigem, alkalischem Färbebad oder im Druck in Gegenwart von Alkali, marineblaue Färbungen und Drucke mit sehr guten Naßechtheiten, einer sehr guten Lichtechtheit und einer hohen Fixierausbeute.

**Beispiel 5**

Eine wäßrige Lösung mit einem pH-Wert von 5 von 58,4 Teilen der Monoazoverbindung 1,2'-Dihydroxy-6',8-diamino-4',5,7-trisulfo-1',2-azonaphthalin in 400 Teilen Wasser werden mit einer Lösung von 46 Teilen Äthylenglykol-bis-[ 4-(4',6'-dichlor-s-triazinyl-amino)-2-β-sulfatoäthylsulfonyl-phenyl]-äther in 100 Teilen Wasser vermischt. Dieser Acylierungsansatz wird auf 60°C erwärmt und mittels Natriumcarbonat auf einen pH-Wert von 6,0 gehalten. Nach beendeter Reaktion werden 22,5 Teile basisches Kupfercarbonat zugesetzt und die Reaktionstemperatur weiterhin 30 Minuten lang bei 60°C gehalten. Anschließend wird die erhaltene marineblaue Lösung filtriert, um geringe unlösliche Verunreinigungen abzutrennen. Die erfindungsgemäße Kupferkomplexverbindung wird mit Natriumchlorid ausgesalzen, abfiltriert, getrocknet und vermahlen. Man erhält ein dunkelblaugraues Pulver, das neben Elektrolytsalzen (vorwiegend Natriumchlorid) das Natriumsalz der Verbindung der Formel

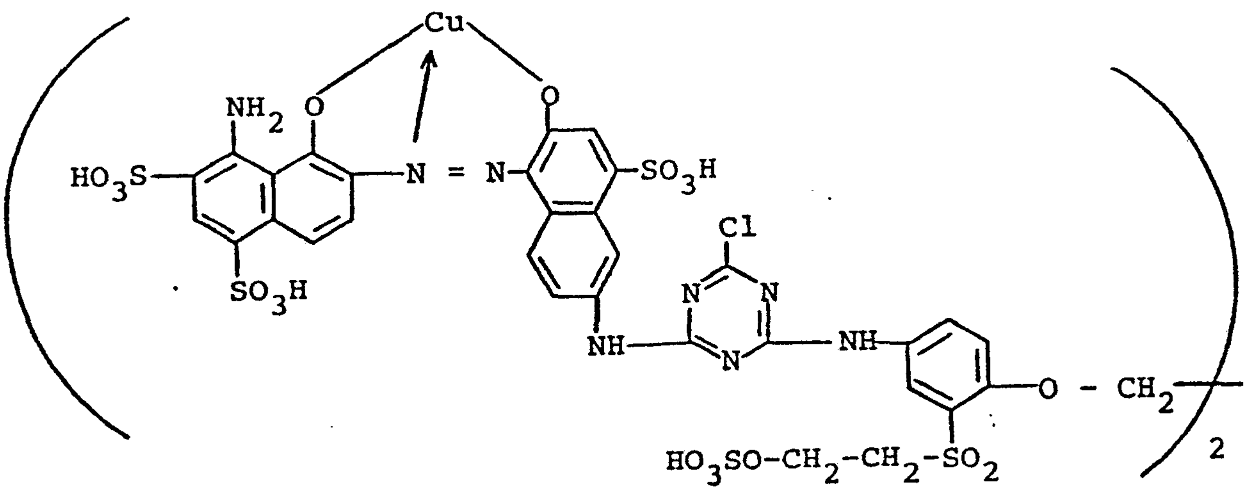

enthält. Diese besitzt sehr gute faserreaktive Farbstoffeigenschaften und liefert beispielsweise auf Baumwolle oder Zellwolle aus wäßriger Färbeflotte oder im Druck in Gegenwart von Alkali lebhafte rotstichig blaue Färbungen und Drucke mit sehr guten Naßechtheiten und einer sehr guten Lichtechtheit bei hoher Fixierausbeute.

**Beispiel 6**

Eine neutrale Lösung von 40,1 Teilen der Aminoazoverbindung 2-Methyl-4-amino-5-methoxy-2',5'-disulfo-1,1'-azobenzol in 150 Teilen Wasser werden mit 20 Volumenteilen einer wäßrigen 5n-Natriumnitritlösung vermischt. Diese Mischung wird unter kräftigem Rühren in eine Mischung aus 75 Teilen Eis und 40 Teilen einer 31 %igen wäßrigen Salzsäure einlaufen lassen. Nach einer Rührzeit von 45 Minuten wird überschüssige salpetrige Säure

mit Amidosulfonsäure zersetzt. Die Lösung des Diazoniumsalzes wird sodann mit Natriumcarbonat auf einen pH-Wert von 4,5 eingestellt, wobei die Temperatur unter 5°C gehalten wird. Sodann wird eine neutrale Lösung von 23,9 Teilen 2-Amino-5-naphthol-7-sulfonsäure in 100 Teilen Wasser und 50 Teile Eis und anschließend unter gutem Rühren die zuvor hergestellte Diazoniumsalzlösung zugegeben; während der Zugabe wird der pH-Wert mit verdünnter Natronlauge bei 6,0 bis 6,5 gehalten.

Nach beendeter Kupplung gibt man eine Lösung von 27,5 Teilen kristallinem Kupfersulfat in 100 Volumenteilen einer 26 %igen wäßrigen Ammoniaklösung hinzu und erhitzt diesen Ansatz im Autoklaven auf 100°C. Nach beendeter Metallisierung kühlt man den Reaktionsansatz auf Raumtemperatur ab, stellt ihn mit Salzsäure auf einen pH-Wert von 6,0 und isoliert die Kupferkomplex-Disazoverbindung durch Aussalzen mit Kaliumchlorid.

Zur Überführung dieser Kupferkomplexdisazoverbindung in die erfindungsgemäße Kupferkomplex-Tetrakisazoverbindung löst man 69,9 Teile davon in 200 Teilen Wasser und gibt eine Lösung von 46,0 Teilen Äthylenglykol-bis-[ 4-(4',6'-dichlor-s-triazinyl-amino)-2-β-sulfatoäthylsulfonyl-phenyl ]-äther in 150 Teilen Wasser hinzu. Diese Reaktionsmischung wird auf 60°C erwärmt und der pH gleichzeitig bei einem Wert zwischen 6,0 und 6,5 mit Natriumcarbonat gehalten. Die Acylierungsreaktion wird bei diesem pH-Bereich und bei dieser Temperatur noch eine Stunde weitergeführt und beendet. Die so hergestellte erfindungsgemäße Kupferkomplexverbindung wird mit Natriumchlorid ausgesalzen und in üblicher Weise isoliert. Man erhält das Natriumsalz der Verbindung der Formel

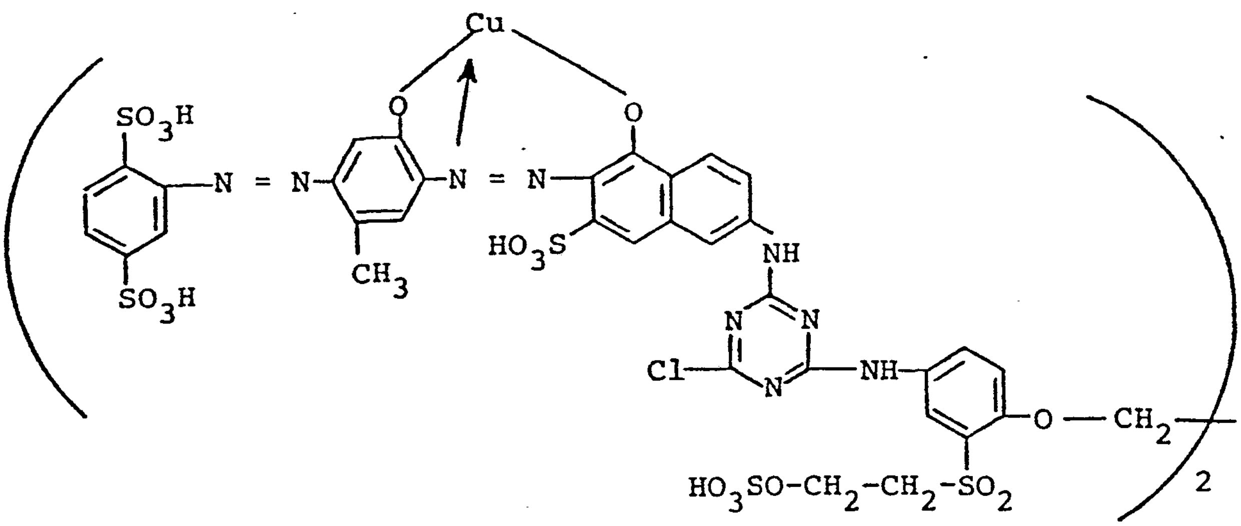

die gute faserreaktive Farbstoffeigenschaften besitzt und nach den in der Technik üblichen Applikations- und Fixiermethoden, insbesondere in Gegenwart von Alkali auf Cellulosefasermaterialien, wie Baumwolle oder Regeneratcellulose, marineblaue Färbungen und Drucke mit sehr guten Naß- und Lichtechtheiten in hoher Fixierausbeute liefert.

**Beispiel 7**

13,7 Teile Anthranilsäure werden in üblicher Weise diazotiert; 33,3 Teile der als Kupplungskomponente dienenden Verbindung der Formel

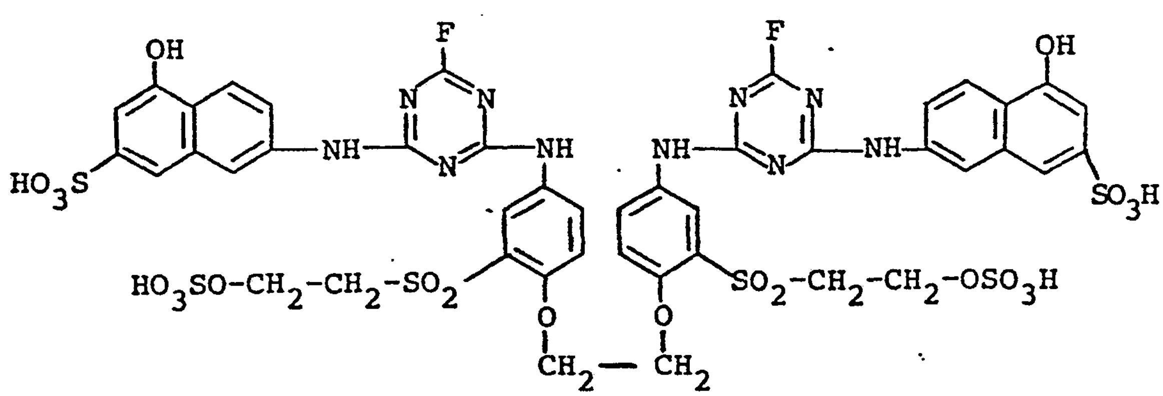

werden hinzugegeben, und der pH-Wert wird mit Natriumcarbonat auf 6,0 bis 6,5 eingestellt und bis zur beendeten Kupplungsreaktion gehalten. Sodann gibt man 25 Teile kristallines Kaliumchromsulfat und 40 Teile kristallines Natriumacetat hinzu und erhitzt diesen Ansatz bis zur vollständigen Ausbildung des 1:2-

Chromkomplexes bei einer Temperatur von 90 bis 95°C.

Die so hergestellte erfindungsgemäße Chromkomplexverbindung wird in üblicher Weise, beispielsweise durch Eindampfen der Syntheselösung, isoliert. Es wird ein dunkelbraunes Pulver erhalten, das neben Elektrolytsalzen das Natriumsalz der Verbindung der Formel

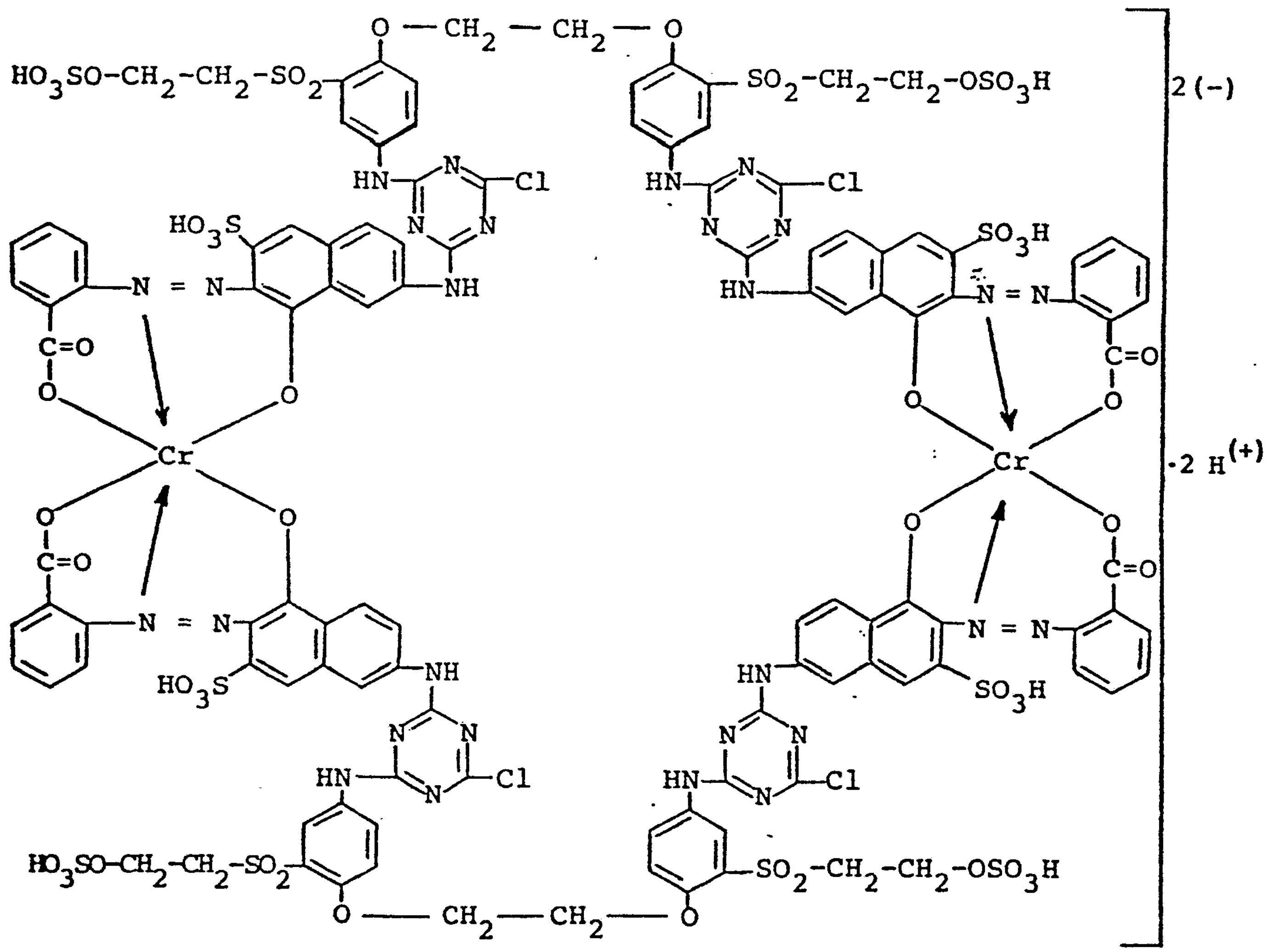

enthält. Diese zeigt sehr gute faserreaktive Farbstoffeigenschaften und liefert beispielsweise auf Cellulosefasern im Druck in Gegenwart von Alkali rotbraune Färbungen mit sehr guten Naßechtheitseigenschaften und einer guten Lichtechtheit bei hoher Fixierausbeute.

Die hier verwendete Kupplungskomponente kann wie folgt hergestellt werden: Zu einer neutralen Lösung von 31,1 Teilen Äthylenglykol-bis-(4-amino-2-β-sulfatoäthylsulfonyl-phenyl)-äther in 75 Teilen Wasser gibt man bei 5°C 13,6 Teile Cyanurfluorid tropfenweise unter gutem Rühren hinzu, wobei der pH mittels Natriumbicarbonat bei einem Wert von 3,0 bis 3,5 gehalten wird. Danach wird der Ansatz noch 10 Minuten weitergerührt und sodann mit einer wäßrigen Lösung von einem pH-Wert von 6,7 von 23,9 Teilen 2-Amino-5-naphthol-7-sulfonsäure in 150 Teilen Wasser versetzt. Das Reaktionsgemisch wird auf einen pH-Wert von 5,5 gestellt und bei diesem pH zunächst 2 Stunden bei Raumtemperatur, anschließend eine Stunde bei 50°C weitergerührt. Die so hergestellte Kupplungskomponente kann entweder durch Eindampfen oder durch Aussalzen isoliert werden; die Kupplungskomponente kann jedoch auch in den obigen Ansatz in Form dieser Lösung in entsprechender Menge eingesetzt werden.

**Beispiel 8**

37,7 Teile 2-Aminophenol-4-β-sulfatoäthylsulfon-6-sulfon-säure werden in üblicher Weise in wäßriger, salzsaurer Lösung mit Natriumnitrit diazotiert. Sodann gibt man zur Kupplung 29,9 Teile 1-(2'-Sulfo-5'aminophenyl)-3-carboxy-pyrazol-5-on hinzu. Der pH-Wert der Reaktionsmischung wird mit Natriumcarbonat auf 6,5 eingestellt; nach beendeter Kupplung wird der Ansatz auf 10°C abgekühlt, und 1ß,8 Teile Cyanurchlorid werden hinzugegeben. Während dieser Acylieungsreaktion wird der pH-Wert mit Natriumcarbonat bei 4,0 bis 4,5 gehalten. Nach beendeter Reaktion wird der Ansatz filtriert und mit einer wäßrigen neutralen Lösung von 31,1 Teilen Äthylenglykol-bis-(2-amino-4-β-sulfato-äthylsulfonyl-phenyl)-äther in 150 Teilen Wasser versetzt. Diese zweite Acylierungsreaktion wird bei einem pH-Wert bei 6,0 und bei einer Temperatur von 60°C durchgeführt.

Danach gibt man zur Überführung der so hergestellten metallfreien Disazoverbindung in die

erfindungsgemäße Kupferkomplexverbindung 22,5 Teile basisches Kupfercarbonat hinzu und hält die Temperatur des Reaktionsansatzes weiterhin 90 Minuten lang auf 60°C. Anschließend wird filtriert und die erfindungsgemäße Verbindung mit Natriumchlorid ausgesalzen. Es wird ein gelbbraunes Pulver erhalten, das neben anorganischen Elektrolytsalzen das Natriumsalz der Verbindung der Formel

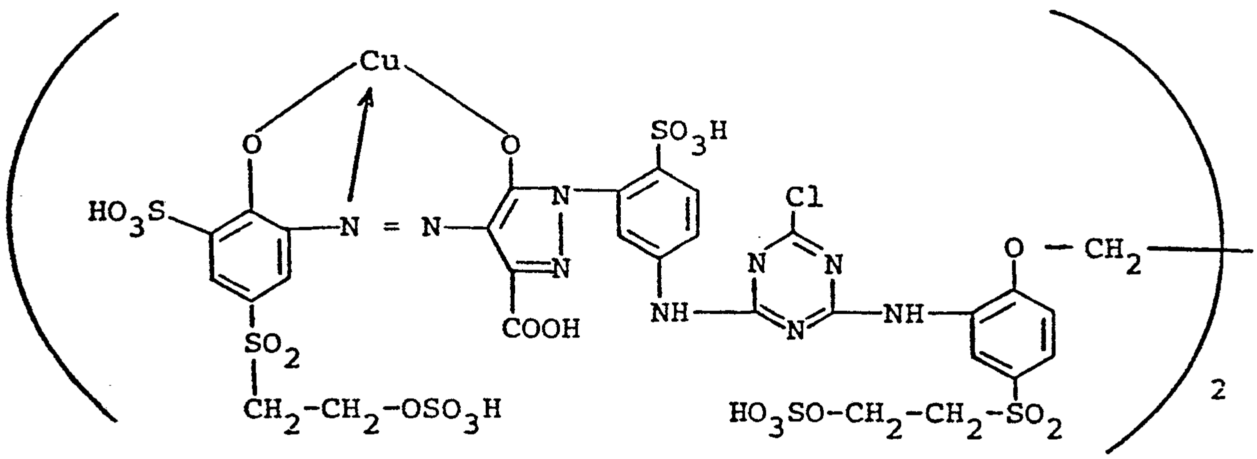

enthält, die sehr gute faserreaktive Farbstoffeigenschaften besitzt und beispielsweise Baumwolle oder Zellwolle in Gegenwart von Alkali in braungelben Tönen mit sehr guten Nass- und Lichtechtheiten und einer sehr hohen Fixierausbeute färbt.

**Beispiel 9**

37,7 Teile 2-Aminophenol-4-β-sulfatoäthylsulfon-6-sulfonsäure werden in üblicher Weise diazotiert und mit 27,2 Teilen 4-(Acetoacetylamino)-anilin-2-sulfonsäure bei einem pH-Wert von 6,5 gekuppelt. Die Lösung der so hergestellten Azoverbindung wird auf 10°C gekühlt und mit 20 Teilen Cyanurchlorid versetzt. Während der Acylierungsreaktion wird mit Natriumcarbonat der pH-Wert bei 5,5 gehalten; nach Beendigung dieser Acylierungsreaktion wird filtriert, und das Filtrat wird mit einer neutralen wäßrigen Lösung von 32,7 Teilen Äthylenglykol-bis-(4-amino-2-β-thiosulfato-äthylsulfonyl-phenyl)-äther in 150 Teilen Wasser versetzt. Die Acylierungsreaktion erfolgt bei 60°C bei einem pH-Wert von 6,0. Anschließend gibt man 14 Teile basisches Kobaltcarbonat hinzu, erhitzt die Mischung bei 75°C, klärt sie durch Filtration und isoliert die erfindungsgemäße Kobaltkomplexverbindung durch Eindampfen. Man gewinnt so das Natriumsalz der erfindungsgemäßen Verbindung der Formel

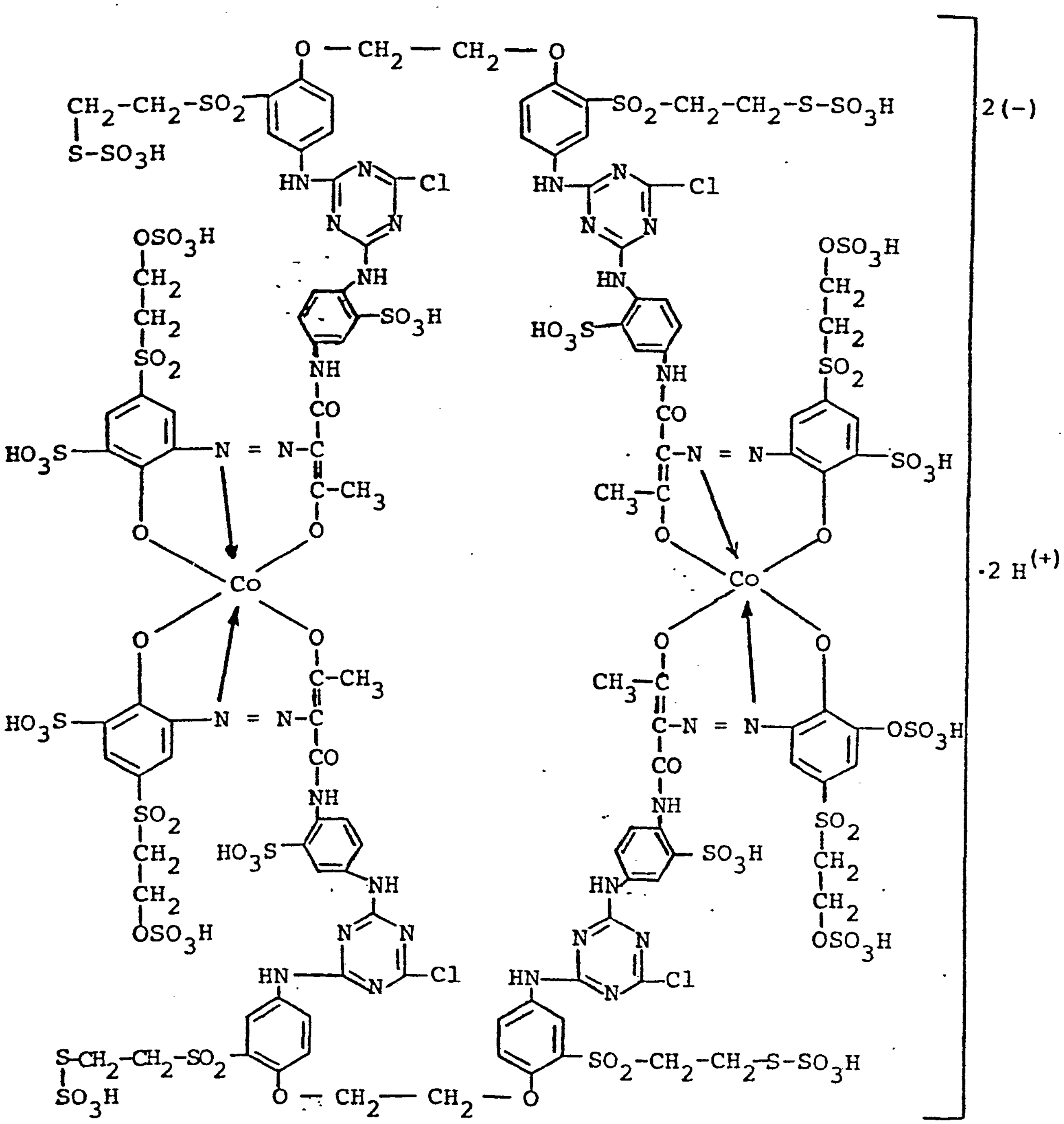

die sehr gute faserreaktive Eigenschaften besitzt und beispielsweise Baumwolle oder Zellwolle nach den in der Technik üblichen Applikations- und Fixiermethoden in braungelben Tönen mit sehr guten Naß- und Lichtechtheiten und einer sehr guten Fixierausbeute färbt.

**Beispiel 10 bis 32**

In den nachfolgenden Tabellenbeispielen sind weitere erfindungsgemäße Metallkomplexverbindungen mit Hilfe ihrer Komponenten, aus denen sie zusammen mit dem Rest des Cyanurchlorids oder Cyanurfluorids aufgebaut sind, beschrieben. Sie lassen sich aus diesen Aminophenol- und Aminonaphthol-Verbindungen als Diazokomponente und mit diesen Kupplungskomponenten und Cyanurchlorid bzw. Cyanurfluorid und dem Äthylenglykol-bis-aminophenyl-äther sowie einer entsprechenden kupfer-, chrom- oder kobaltabgebenden Verbindung in erfindungsgemäßer Weise, wie beispielsweise nach einer in den obigen Beispielen 1 bis 9 beschriebenen Verfahrensvarianten, herstellen. Sie werden vorzugsweise in Form ihrer Alkalimetallsalze, wie

Natrium- oder Kaliumsalze, isoliert. (Die für sie angegebenen Ausgangskomponenten sind, sofern sie eine saure Gruppe besitzen, in Form der freien Säure angegeben.)

Diese erfindungsgemäßen Metallkomplex-Azoverbindungen der Beispiele 10 bis 32 besitzen ebenfalls sehr gute faserreaktive Farbstoffeigenschaften und liefern auf den in der Beschreibung genannten Materialien, wie insbesondere Cellulosefasermaterialien, beispielsweise Baumwolle, nach den in der Technik für faserreaktive Farbstoffe üblichen Applikations- und Fixiermethoden farbstarke Färbungen und Drucke mit guten Echtheiten mit dem in dem jeweiligen Tabellenbeispiel für die Färbung auf Baumwolle angegebenen Farbton.

| Bsp. | Diazokomponente | Kupplungskomponente | Halogen-s-triazin | Äthylenglykol-bis-äther (5) | Komplexmetall | Farbton |
|---|---|---|---|---|---|---|
| 10 | 2-Aminophenol-4-ß-thiosulfatoäthylsulfon | 1-Amino-8-naphthol-3,6-disulfonsäure | Cyanurchlorid | Äthylenglykol-bis-(4-amino-2-ß-sulfatoäthylsulfonylphenyl)-äther | Cr | schwarz |
| 11 | 2-Aminophenol-5-sulfonsäure | dito | dito | dito | Cu | violett |
| 12 | 2-Aminophenol-5-ß-sulfatoäthylsulfon | dito | dito | dito | Cr | schwarz |
| 13 | 4-Nitro-2-aminophenol-6-sulfonsäure | dito | dito | dito | Cr | schwarz |
| 14 | 2,4-Diaminophenol-6-sulfonsäure | 2-(N-Methyl-N-ß-sulfatoäthylsulfonyl)-amino-5-naphthol-7-sulfonsäure | dito | dito | Cu | bordo |
| 15 | dito | 1-(4'-Sulfophenyl)-3-methyl-pyrazolon-5 | dito | dito | Cu | gelbbraun |
| 16 | dito | 1-Acetoacetylamino-2-methoxy-5-methyl-benzol-4-sulfonsäure | dito | dito | Cu | gelbbraun |
| 17 | dito | 1-Naphthol-4-sulfonsäure | dito | dito | Co | bordo |
| 18 | 6-Nitro-1-diazo-2-naphthol-4-sulfonsäure | 2-Amino-5-naphthol-7-sulfonsäure | dito | dito | Cr | schwarz |
| 19 | 4-Chlor-2-aminophenol-6-sulfonsäure | 2-Amino-8-naphthol-6-sulfonsäure | Cyanurfluorid | dito | Cu | rubin |

| Bsp. | Diazokomponente | Kupplungs-komponente | Halogen-s-triazin | Äthylenglykol-bis-äther (5) | Komplex-metall | Farbton |
|---|---|---|---|---|---|---|
| 20 | 2-Aminophenol-4-sulfonamid | 1-(4'-Amino-2'-sulfophenyl)-3-carboxy-pyrazolon-5 | Cyanurfluorid | Äthylenglykol-bis-(4-amino-2-ß-sulfatoäthylsulfonyl-phenyl)-äther | Cr | orange |
| 21 | 2-Aminophenol-4-carbonsäure | dito | dito | dito | Cr | orange |
| 22 | 2-Amino-benzoesäure-5-sulfonsäure | dito | dito | dito | Co | gelb |
| 23 | 2-Naphthylamin-4,8-disulfonsäure | 1-Amino-8-naphthol-4,6-disulfonsäure | Cyanurchlorid | dito | Cu | marine-blau |
| 24 | 2,4-Diaminophenol-6-sulfonsäure | 1-(6'-ß-Sulfatoäthylsulfonyl-2'-naphthyl)-3-carboxy-pyrazolon-5 | dito | Äthylenglykol-bis-(2-amino-4-ß-sulfatoäthylsulfonyl-phenyl)-äther | Co | orange |
| 25 | dito | 1-(5'-Sulfo-2'-naphthyl)-3-carboxy-pyrazolon-5 | dito | dito | Cu | orange |
| 26 | dito | N-Acetoacetyl-2,5-dimethoxyanilin-4-ß-sulfatoäthylsulfon | dito | dito | Co | gelb |
| 27 | 2-Aminophenol-4-ß-sulfatoäthylsulfon-6-sulfonsäure | 2-Amino-8-naphthol-3,6-disulfonsäure | dito | Äthylenglykol-bis-(4-amino-2-ß-sulfatoäthylsulfonyl-phenyl)-äther | Cu | rubin |
| 28 | 6-Nitro-2-amino-phenol-4-ß-sulfatoäthylsulfon | 1-(2'-Sulfo-5'-aminophenyl)-3-carboxy-pyrazolon-5 | dito | dito | Co | rot |

| Bsp. | Diazokomponente | Kupplungs-komponente | Halogen-s-triazin | Äthylenglykol-bis-äther (5) | Komplex-metall | Farbton |
|---|---|---|---|---|---|---|
| 29 | 2-Methyl-4-amino-5-methoxy-3'-sulfo-1,1'-azobenzol | 2-Methyl-amino-5-naphthol-7-sulfonsäure | Cyanurchlorid | Äthylenglykol-bis-(4-amino-2-ß-sulfatoäthylsulfonyl-phenyl)-äther | Cu | marineblau |
| 30 | 2,5-Diaminophenol | 1-Naphthol-3,6,8-trisulfonsäure | dito | dito | Cu | rotviolett |
| 31 | 1-Amino-8-naphthol-4,6-disulfonsäure | 2-Amino-5-naphthol-8-sulfonsäure | dito | dito | Cu | blau |
| 32 | 4-Nitro-2-aminophenol-6-sulfonsäure | 2-Amino-8-naphthol-6-sulfonsäure | dito | dito | Co | braun |

**Patentansprüche:**

1. Wasserlösliche symmetrische Schwermetallkomplexverbindungen einer metallfreien Azoverbindung der allgemeinen Formel (1)

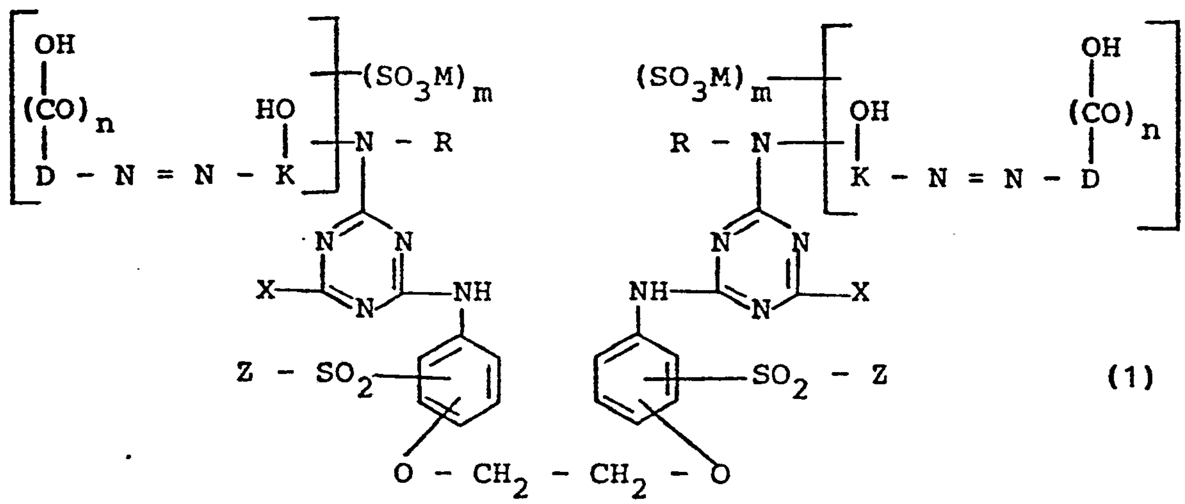

(1)

in welcher bedeuten:
m ist die Zahl 1, 2 oder 3;
n ist die Zahl Null oder 1;
D ist der Rest einer Diazokomponente der Benzol- oder Naphthalinreihe, an den die Triazinylaminogruppe und die angegebene(n) Sulfogruppe(n) gebunden sein können und der neben diesen Gruppen und der metallkomplexbildenden Carboxy- bzw. Hydroxygruppe, die an D in ortho-Stellung zur Azogruppe gebunden ist, noch weitere Substituenten und/oder eine faserreaktive Gruppe enthalten kann, wobei diese beiden Diazokomponenten gleich sind;
K ist zusammen mit der Hydroxygruppe der Rest einer Kupplungskomponente der Naphthol-, 1-Aryl-pyrazolon- oder Acetessigsäurearylid-Reihe, an den die Triazinylaminogruppe und die angegebene(n) Sulfogruppe(n) gebunden sein können und der neben diesen Gruppen und der metallkomplexbildenden Hydroxygruppe, die an K in ortho-Stellung zur Azogruppe gebunden ist, noch weitere Substituenten und/oder eine faserreaktive Gruppe enthalten kann, wobei diese beiden Kupplungskomponenten gleich sind;
R ist ein Wasserstoffatom oder eine niedere Alkylgruppe, wobei beide R gleiche Bedeutungen besitzen;
X ist ein Chlor- oder Fluoratom, wobei beide X gleiche Bedeutungen besitzen;
Z ist die Vinylgruppe oder eine Gruppe der Formel $-CH_2-CH_2-Y$, in welcher
Y einen anorganischen oder organischen, alkalisch eliminierbaren Rest bedeutet;
M ist ein Wasserstoffatom oder das Äquivalent eines ein-, zwei- oder dreiwertigen Metalls;
die beiden Gruppen $-SO_2-Z$, die an die beiden durch den Äthylendioxirest verbundenen Benzolkerne gebunden sind, haben gleiche Bedeutung;
die Triazinylaminogruppe kann jeweils an den Formelrest D oder an den Formelrest K gebunden sein;
die angegebene(n) Sulfogruppe(n) kann (können) an D oder an K oder an beide gebunden sein.

2. Schwermetallkomplexverbindungen nach Anspruch 1, dadurch gekennzeichnet, daß sie 1:1-Kupferkomplex-Verbindungen darstellen.

3. Schwermetallkomplexverbindungen nach Anspruch 1, dadurch gekennzeichnet, daß sie 1:2-Chrom- oder 1:2-Kobaltkomplex-Verbindungen darstellen.

4. Verbindungen nach Anspruch 1, 2 oder 3, dadurch gekennzeichnet, daß D als Rest einer Diazokomponente der Benzol- oder Naphthalinkern ist, an den die Triazinylaminogruppe und die angegebene(n) Sulfogruppe(n) gebunden sein können und D neben diesen Gruppen und der metallkomplexbildenden Carboxy- oder Hydroxygruppe, die an D in ortho-Stellung zur Azogruppe gebunden ist, noch durch Substituenten aus der Gruppe: niederes Alkyl, niederes Alkoxy, Nitro, Halogen, Carboxy, niederes Carbalkoxy, Carbophenoxy, Carbamoyl, durch niederes Alkyl, Phenyl und/oder niederes Phenylalkyl mono- oder disubstituiertes Carbamoyl, Sulfamoyl, durch niederes Alkyl, Phenyl und/ oder niederes Phenylalkyl mono- oder disubstituiertes Sulfamoyl, niederes Alkylsulfonyl, niederes Alkanoylamino und Benzoylamino - und/oder durch eine faserreaktive Gruppe substituiert sein kann.

5. Verbindungen nach Anspruch 1, 2 oder 3, dadurch gekennzeichnet, daß D als Rest einer Diazokomponente der Benzoloder Naphthalinkern ist, an den die Triazinylaminogruppe und die angegebene(n) Sulfogruppe(n) gebunden sein können und D neben diesen Gruppen und der metallkomplexbildenden Carboxy- oder Hydroxygruppe, die an D in ortho-Stellung zur Azogruppe gebunden ist, noch durch Substituenten aus der

Gruppe Methoxy, Äthoxy, Methyl, Äthyl, Carboxy, Nitro, Chlor und Brom substituiert sein kann.

6. Verbindungen nach einem der Ansprüche 1 bis 5, dadurch gekennzeichnet, daß n für die Zahl Null steht.

7. Verbindungen nach einem der Ansprüche 1 bis 6, dadurch gekennzeichnet, daß der Bis-(aminotriazinylaminophenoxy)äther-Rest an beide K gebunden ist.

8. Verbindungen nach einem der Ansprüche 1 bis 6, dadurch gekennzeichnet, daß K einen Rest der allgemeinen Formel

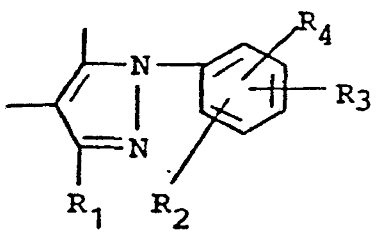

oder

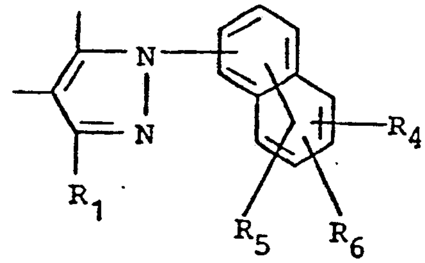

darstellt, in welchen $R_1$ die Methylgruppe oder die Carboxygruppe ist $R_2$ ein Wasserstoffatom, eine Methyl- Äthyl-, Äthoxy-, Methoxy- oder Nitrogruppe oder eine der in Formel (1) von Anspruch 1 angegebenen Sulfogruppen oder ein Chlor- oder Bromatom ist, $R_3$ ein Wasserstoffatom oder ein Chloratom oder eine Methyl-, Äthyl-, Methoxy- oder Äthoxygruppe oder eine der in Formel (1) von Anspruch 1 angegebenen Sulfogruppen ist, $R_4$ der in Formel (1) von Anspruch 1 angegebene Halogentriazinylaminorest ist, $R_5$ ein Wasserstoffatom oder eine der in Formel (1) von Anspruch 1 angegebenen Sulfogruppen bedeutet und $R_6$ eine der in Formel (1) von Anspruch 1 angegebenen Sulfogruppen darstellt.

9. Verbindungen nach einem der Ansprüche 1 bis 6, dadurch gekennzeichnet, daß K einen Rest der allgemeinen Formel

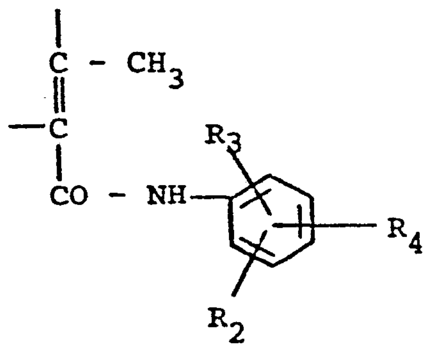

oder

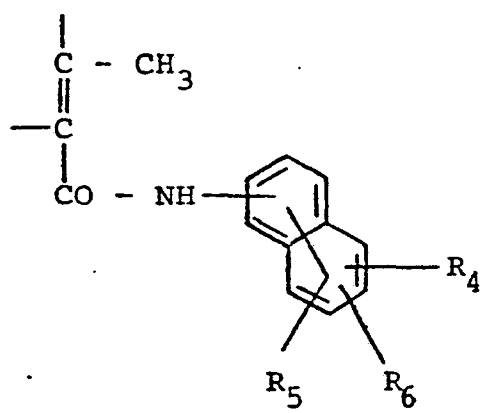

darstellt, in welchen $R_2$ ein Wasserstoffatom, eine Methyl-, Äthyl-, Äthoxy-, Methoxy-, Carboxy- oder Nitrogruppe oder eine der in Formel (1) von Anspruch 1 angegebenen Sulfogruppen oder ein Chlor- oder Bromatom ist, $R_3$ ein Wasserstoffatom oder ein Chloratom oder eine Methyl-, Äthyl-, Methoxy- oder Äthoxygruppe oder eine der in Formel (1) von Anspruch 1 angegebenen Sulfogruppen ist, $R_4$ der in Formel (1) von Anspruch 1 angegebene Halogentriazinylaminorest ist, $R_5$ ein Wasserstoffatom oder eine der in Formel (1) von Anspruch 1 angegebenen Sulfogruppen bedeutet und $R_6$ eine der in Formel (1) von Anspruch 1 angegebenen Sulfogruppen darstellt.

10. Verbindungen nach einem der Ansprüche 1 bis 6, dadurch gekennzeichnet, daß K ein Naphthalinrest ist, in welchem die Hydroxygruppe in ortho-Stellung zur Azogruppe gebunden ist und K neben diesen beiden Gruppen noch durch den in Formel (1) von Anspruch 1 angegebenen Halogentriazinylaminorest und durch eine oder zwei der in Formel (1) von Anspruch 1 angegebenen Sulfogruppen substituiert ist.

11. Verbindungen nach einem der Ansprüche 1 bis 10, dadurch gekennzeichnet, daß Z die Vinylgruppe oder die β-Sulfatoäthyl-Gruppe bedeutet.

12. Verbindungen nach einem der Ansprüche 1 bis 11, dadurch gekennzeichnet, daß M für ein Wasserstoffatom oder ein Alkalimetall steht.

13. Verbindungen nach Anspruch 5, dadurch gekennzeichnet, daß D durch eine faserreaktive Gruppe

substituiert ist.

14. Verbindung nach einem der Ansprüche 1 bis 5, dadurch gekennzeichnet, daß die an D gebundene faserreaktive Gruppe oder die an K gebundene faserreaktive Gruppe die Vinylsulfonyl- oder eine β-Sulfatoäthylsulfonyl-Gruppe ist.

15. Verfahren zur Herstellung der in Anspruch 1 genannten und definierten Schwermetallkomplexverbindungen, dadurch gekennzeichnet,

daß man eine metallfreie Verbindung der in Anspruch 1 genannten und definierten allgemeinen Formel (1) mit einer schwermetallabgebenden Verbindung umsetzt, oder daß man eine Schwermetallkomplexverbindung einer Verbindung der allgemeinen Formel (8)

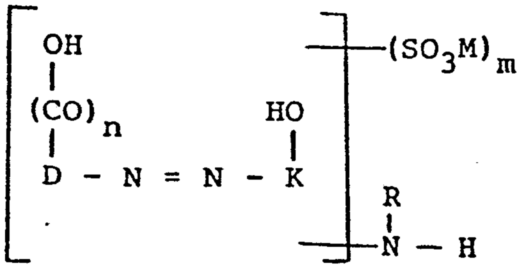

worin -K-OH, D, M, R, m und n die obengenannten Bedeutungen haben und die Aminogruppe der Formel -NHR an D oder an K gebunden ist, in äquimolarer Menge zunächst mit Cyanurchlorid oder Cyanurfluorid monoacyliert und die Dihalogenotriazinylamino-Schwermetallkomplexazoverbindung in zweifach molarer Menge mit der Diaminoverbindung der allgemeinen Formel

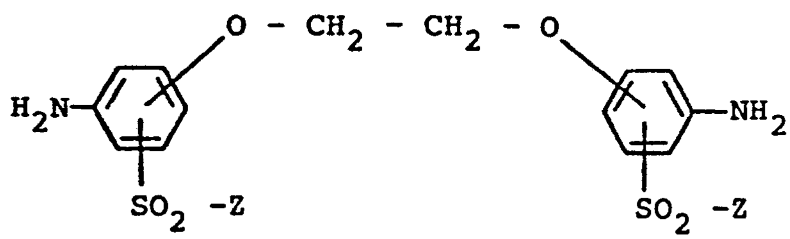

in welcher Z die in Anspruch 1 genannten Bedeutungen haben und die beiden Gruppen $-SO_2-Z$ gleiche Bedeutungen besitzen, umsetzt, oder

daß man eine Schwermetallkomplexverbindung einer Verbindung der oben genannten und definierten allgemeinen Formel (8) in zweifach molarer Menge mit einer Bisdihalogenotriazinylamino-Verbindung der allgemeinen Formel

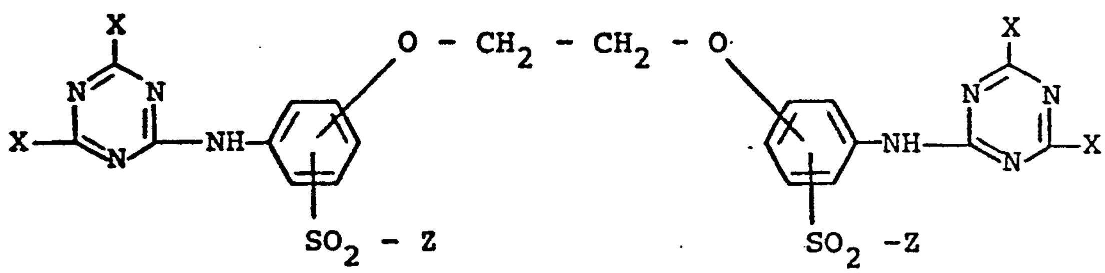

in welcher X und Z die in Anspruch 1 genannten Bedeutungen haben und die beiden Gruppen $-SO_2-Z$ gleiche Bedeutungen besitzen, umsetzt.

16. Verfahren zur Herstellung der in Anspruch 1 genannten und definierten 1:1-Kupferkomplex-Verbindungen, bei denen jedoch n die Zahl Null bedeutet, dadurch gekennzeichnet, daß man eine metallfreie. Azoverbindung der allgemeinen Formel

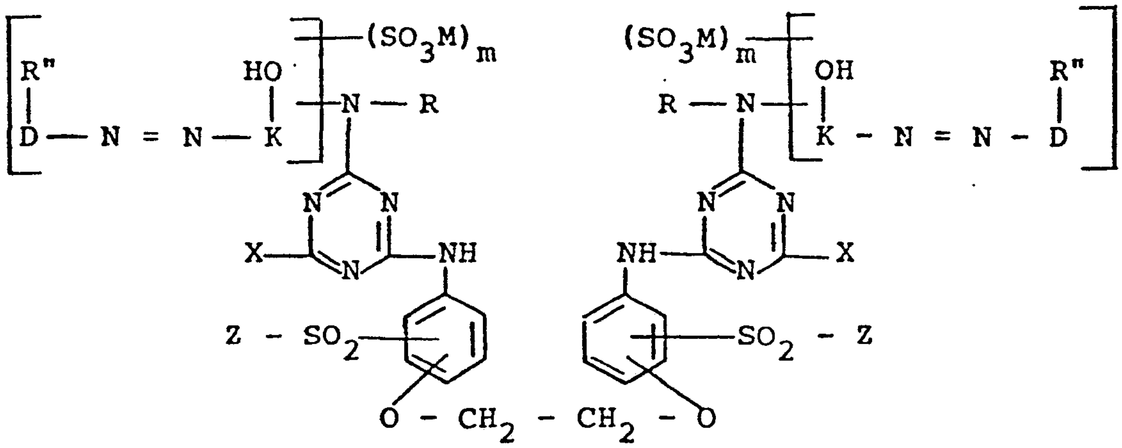

in welcher R'' an D in ortho-Stellung zur Azogruppe gebunden ist und ein Wasserstoffatom oder eine niedere Alkoxygruppe bedeutet und der Formelrest -K-OH sowie D, M, R, X und m und die Gruppen $-SO_2-Z$ die in Anspruch 1 genannten Bedeutungen haben, mit einer kupferabgebenden Verbindung unter oxidierenden oder entalkylierenden Bedingungen umsetzt.

17. Verwendung der in Anspruch 1 definierten Schwermetallkomplexverbindungen zum Färben von hydroxy- und/oder carbonamidgruppenhaltigem Material.

**Revendications**

1. Complexes symétriques hydrosolubles dérivant d'un métal lourd et d'un composé azoïque qui, à l'état non métallisé, repond à la formule générale (1):

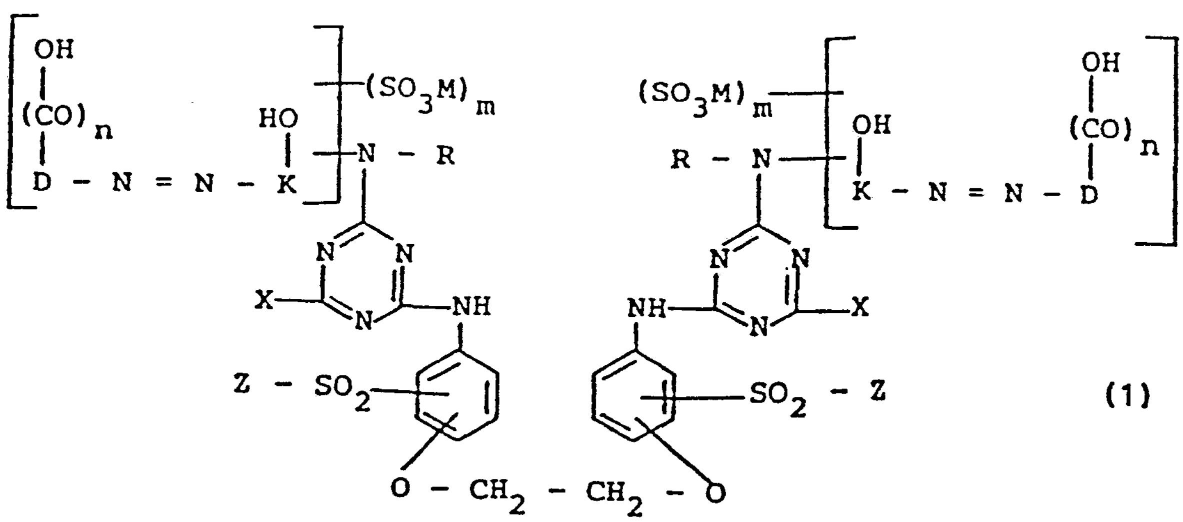

(1)

dans laquelle

m représente un nombre égal à 1, à 2 ou à 3,

n représente le nombre 0 ou le nombre 1,

D represente le radical d'une composante de diazotation de la série benzenique ou naphtalénique, qui peut être lié au radical triazinylamino et au radical ou aux radicaux sulfo indiqués et qui, en plus de ces radicaux et du radical carboxy ou hydroxy, apte à former des complexes avec des métaux, qui se trouve, sur le noyau de D, en position ortho par rapport au radical azo, peut porter des substituants supplémentaires et/ou un radical réactif à l'égard des fibres deux composantes de diazotation étant identiques,

K représente, avec le radical hydroxy, le radical d'un copulant appartenant à la série des naphtols, des aryl-1 pyrazolones ou des arylides d'acide acétylacétique, qui peut être relié au radical triazinylamino et au radical ou aux radicaux sulfo indiqués et qui, en plus de ces radicaux et du radical hydroxy, apte à former des complexes avec des métaux, qui se trouve, sur K, en position ortho par rapport au radical azo, peut porter des substituants

supplémentaires et/ou un radical réactif à l'égard des fibres, ces deux copulants étant identiques,

R représente un atome d'hydrogène ou un radical alkyle inférieur, les deux R ayant la même signification,

X représente un atome de chlore ou de fluor, les deux X ayant la même signification,

Z représente un radical vinyle ou un radical $-CH_2-CH_2-Y$ dans lequel :

Y représente un radical minéral ou organique pouvant être éliminé en milieu alcalin,

M représente un atome d'hydrogéne ou 1'é-quivalent d'un métal univalent, bivalent ou trivalent,

les deux radicaux $-SO_2-Z$ portés par les deux noyaux benzéniques reliés l'un à l'autre par le radical éthylène-dioxy ont la même signification,

le radical triazinylamino peut être porté par le radical D ou par le radical K, et

le ou les radicaux sulfo indiqués peuvent être portés par D ou par K ou par les deux.

2. Complexes de métaux lourds selon la revendication 1 caractérisés en ce qu'ils sont des complexes de cuivre du type 1:1.

3. Complexes de métaux lourds selon la revendication 1 caractérisés en ce qu'ils sont des complexes de chrome 1:2 ou des complexes de cobalt 1:2.

4. Composés selon l'une quelconque des revendications 1, 2 et 3, caractérisés en ce que D, en tant que radical d'une composante de diazotation, est un noyau benzénique ou naphtalénique qui peut porter le radical triazinylamino et le ou les radicaux sulfo indiqués et qui, en plus de ces radicaux et du radical carboxy ou hydroxy capable de former des complexes avec des métaux, lequel se trouve en position ortho sur D relativement au radical azo, peut porter des substituants supplémentaires pris dans l'ensemble suivant : alkyle inférieur, alcoxy inférieur, nitro, halogène, carboxy, alcoxycarbonyle inférieur, phénoxycarbonyle, carbamoyle, carbamoyle porteur d'un ou de deux substituants pris dans l'ensemble constitué par les alkyles inférieurs, le phényle et ou les phénylalkyles inférieurs, sulfamoyle, sulfamoyle éventuellement porteur d'un ou de deux substituants pris dans l'ensemble constitué par les alkyles inférieurs, le phényle et ou les phénylalkyles inférieurs, alkylsulfonyle inférieur, alcanoylamino inférieur et benzoylamino, et/ou un radical réactif à l'égard des fibres.

5. Composés selon l'une quelconque des revendications 1, 2 et 3, caractérisés en ce que D, en tant que radical d'une composante de diazotation, est un radical benzénique ou naphtalénique qui peut être lié au radical triazinylamino et au radical ou aux radicaux sulfo indiqués et qui, en plus de ces radicaux et du radical carboxy ou hydroxy capable de former des complexes avec des métaux, lequel est en position ortho sur D relativement au radical azo, peut porter des substituants supplémentaires pris dans l'ensemble constitué par les radicaux méthoxy, éthoxy, méthyle, éthyle, carboxy, nitro, chloro et bromo.

6. Composés selon l'une quelconque des revendications 1 à 5, caractérisés en ce que n est égal à 0.

7. Composés selon l'une quelconque des revendications 1 à 6, caractérisés en ce que le radical de l'éther bis-(aminotriazinylaminophénoxy) est lié aux deux K.

8. Composés selon l'une quelconque des revendications 1 à 6, caractérisés en ce que K représente un radical répondant à l'une des formules générales suivantes:

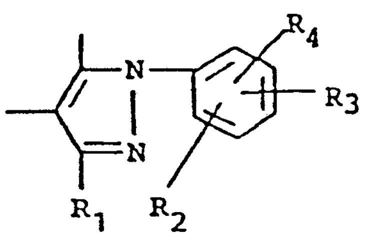

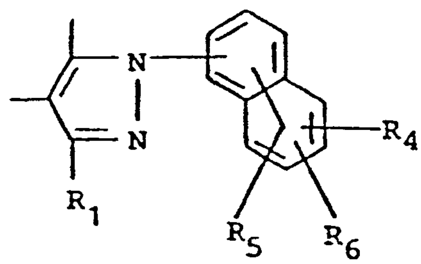

dans lesquelles $R_1$ représente un radical méthyle ou carboxy, $R_2$ représente un atome d'hydrogène, un radical méthyle, éthyle, éthoxy, méthoxy, carboxy ou nitro, un des radicaux sulfo indiqués sur la formule (1) à la revendication 1, ou un atome de chlore ou de brome, $R_3$ représente un atome d'hydrogène ou de chlore, un radical méthyle, éthyle, méthoxy ou éthoxy ou un des radicaux sulfo indiqués sur la formule (1) de la revendication 1, $R_4$ représente le radical halogénotriazinylamino indiqué sur la formule (1) de la revendication 1, $R_5$ représente un atome d'hydrogène ou un des radicaux sulfo indiqués sur la formule (1) de la revendication 1, et $R_6$ représente un des radicaux sulfo indiqués sur la formule (1) de la revendication 1.

9. Composés selon l'une quelconque des revendications 1 à 6, caractérisés en ce que K représente un radical répondant à l'une des formules générales suivantes:

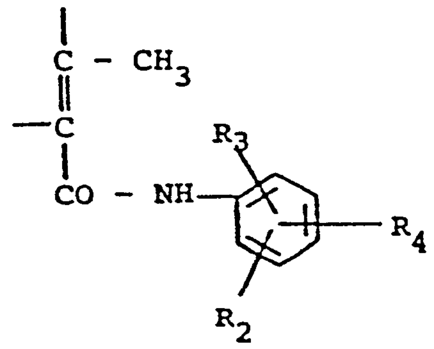

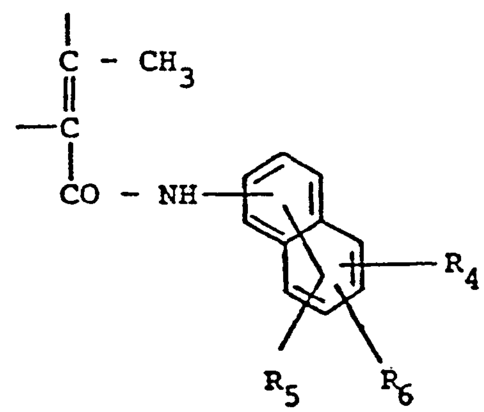

dans lesquelles $R_2$ représente un atome d'hydrogène, un radical méthyle, éthyle, éthoxy, méthoxy, carboxy ou nitro, un des radicaux sulfo indiqués sur la formule (1) de la revendication 1, ou un atome de chlore ou de brome, $R_3$ représente un atome d'hydrogène ou de chlore, un radical méthyle, éthyle, méthoxy ou éthoxy ou un des radicaux sulfo indiqués sur la formule (1) de la revendication 1, $R_4$ représente le radical halogénotriazinylamino indiqué sur la formule (1) de la revendication 1, $R_5$ représente un atome d'hydrogène ou un des radicaux sulfo indiqués sur la formule (1) de la revendication 1, et $R_6$ représente un des radicaux sulfo indiqués sur la formule (1) de la revendication 1.

10. Composés selon l'une quelconque des revendications 1 à 6, caractérisés en ce que K est un radical naphtalénique qui porte le radical hydroxy en position ortho par rapport au radical azo, et K porte, en plus de ces deux radicaux, le radical halogénotriazinylamino indiqué sur la formule (1) de la revendication 1 et un ou deux des radicaux sulfo indiqués sur la formule (1) de la revendication 1.

11. Composés selon l'une quelconque des revendications 1 à 10, caractérisés en ce que Z représente un radical vinyle ou sulfato-2 éthyle.

12. Composés selon l'une quelconque des revendications 1 à 11, caractérisés en ce que M représente un atome d'hydrogéne ou un métal alcalin.

13. Composés selon la revendication 5 caractérisés en ce que D porte un radical réactif à l'égard des fibres.

14. Composés selon l'une quelconque des revendications 1 à 5, caractérisés en ce que le radical réactif (à l'égard des fibres) lié à D ou le radical réactif lié à K est un radical vinylsulfonyle ou sulfato-2 éthylsulfonyle.

15. Procéde de préparation des complexes de métaux lourds qui ont été mentionnés et définis à la revendication 1, procédé caractérisé en ce que :

on fait réagir un composé non métallisé répondant à la formule générale (1) qui a été représentée et définie à la revendication 1, avec un composé capable de céder un métal lourd, ou

on monoacyle d'abord un complexe de métal lourd dérivant d'un composé répondant à la formule générale (8):

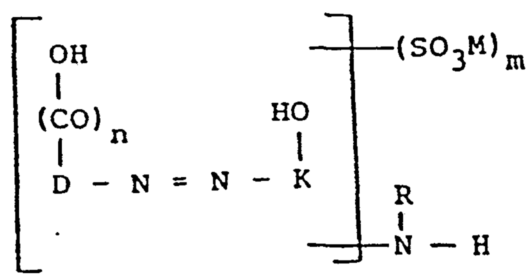

dans laquelle -K-OH, D, M, R, m et n ont les significations précédemment données et le radical amino -NHR est lié à D ou à K, avec une quantité équimolaire de chlorure ou de fluorure de cyanuryle et on fait réagir 2 mol du complexe métal lourd/composé azoïque contenant le radical dihalogénotriazinylamino avec 1 mol du composé diamino répondant à la formule générale:

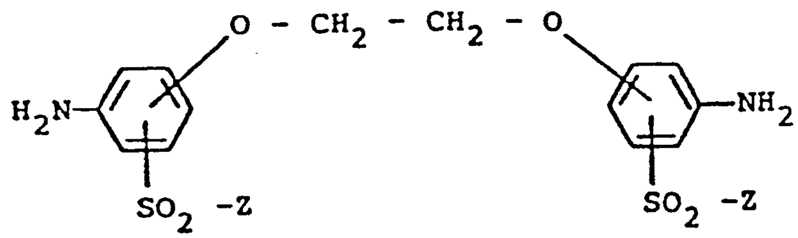

dans laquelle Z a la signification donnée à la revendication 1 et les deux radicaux $-SO_2-Z$ ont la même signification, ou

on fait réagir 2 mol d'un complexe de métal lourd dérivant d'un composé répondant à la formule générale (8) qui a été représentée et définie ci-dessus avec 1 mol d'un composé bis-dihalogénotriazinylamino répondant à la formule générale :

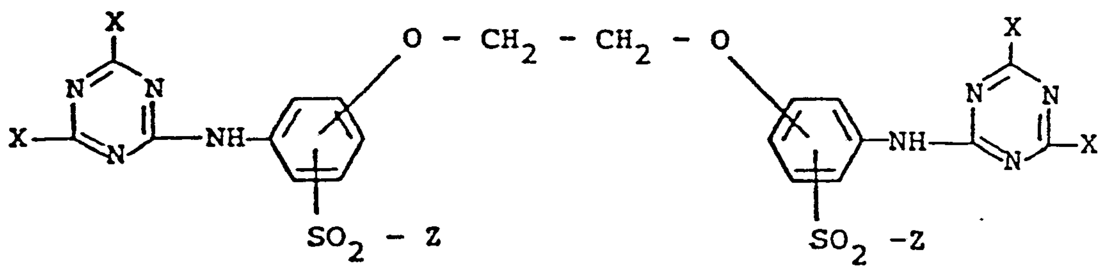

dans laquelle X et Z ont les significations données à la revendication 1 et les deux radicaux $-SO_2-Z$ ont la même signification.

16. Procédé de préparation de ceux des complexes du cuivre 1:1 mentionnés et définis à la revendication 1 ,dans lesquels n représente le nombre 0, procédé caractérisé en ce qu'on fait réagir un composé azoïque non métallisé répondant à la formule générale :

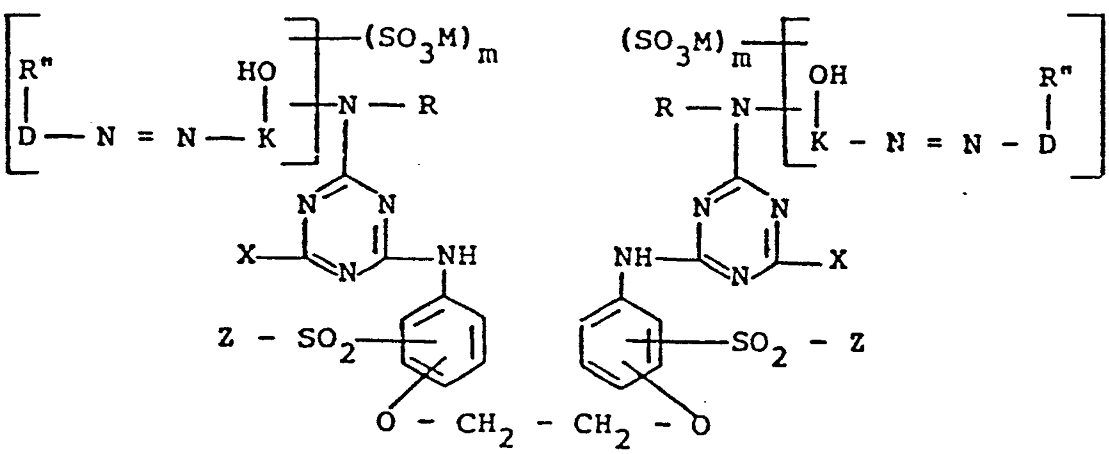

dans laquelle R'' se trouve, sur D, en position ortho relativement au radical azo et représente un atome d'hydrogène ou un radical alcoxy inférieur, et -K-OH, D, M, R, X et m ainsi que les radicaux $-SO_2-Z$ ont les significations données à la revendication 1, avec un composé cédant du cuivre, dans des conditions oxydantes ou désalkylantes.

17. Application des complexes de métaux lourds définis à la revendication 1 pour la teinture de matières contenant des radicaux hydroxy et/ou des radicaux carbamoyles.

**Claims:**

1. Water-soluble symmetrical heavy-metal complex compounds of a metal-free azo conpound of the general formula (1)

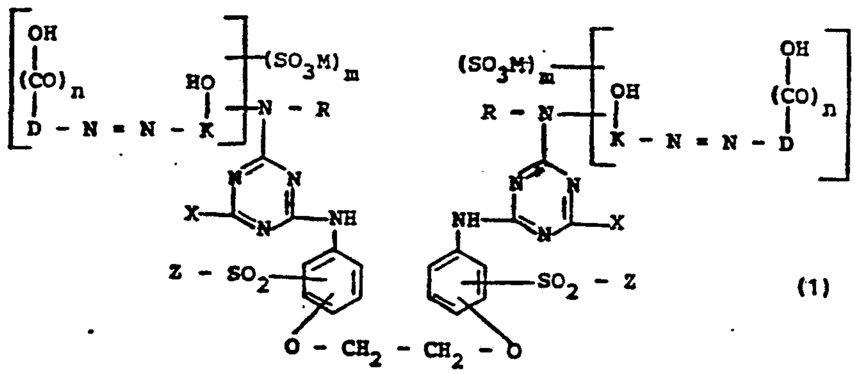

(1)

in wich:
m is the number 1, 2 or 3;
n is the number zero or 1;
D is the radical of a diazo component of the benzene or naphthalene series, to which the triazinylamino group and the sulfo group(s) indicated can be bonded and which, in addition to these groups and the metalcomplexing carboxy or hydroxy group which is bonded to D in ortho-position relative to the azo group, can also contain further substituents and/or a fiberreactive group, and these two components are identical;
K is, together with the hydroxy group, the radical of a coupling component of the naphthol, 1-arylpyrazo-lone or acetoacetarylide series, to which the triazinylamino group and the sulfo group(s) indicated can be bonded and which, in addition to these groups and the metal-complexing hydroxy group which is bonded to K in ortho-position relative to the azo group, can also contain further substituents and/or a fiber-reactive group, and these two coupling components are identical;
R is a hydrogen atom or a lower alkyl group, and the two R have identical meanings;
X is a chlorine or fluorine atom, and the two X have identical meanings;
Z is the vinyl group or a group of the formula $-CH_2-CH_2-Y$ in which
Y denotes an inorganic or organic radical which can be eliminated under alkaline conditions;
M is a hydrogen atom or the equivalent of a monovalent, divalent or trivalent metal;
the two groups $-SO_2-Z$ which are bonded to the two benzene nuclei linked by the ethylenedioxy radical have identical meanings;
each triazinylamino group can be bonded either to the formula moiety D or to the formula moiety K;
the sulfo group(s) indicated can be bonded to D or to K or to both.

2. Heavy-metal complex compounds according to claim 1, characterized by that they are 1:1-copper complex compounds.

3. Heavy-metal complex compound according to claim 1, characterized by that they are 1:2-chromium or 1:2-cobalt complex compounds.

4. Compounds according to claim 1, 2 or 3, characterized by that D as the radical of a diazo component is the benzene or naphthalene nucleus to which the triazinylamino group and the sulfo group(s) indicated may be bonded and D, in addition to these groups and the metalcomplexing carboxy or hydroxy group which is bonded to D in ortho-position relative to the azo group, may also be substituted by substituents from the group consisting of: lower alkyl, lower alkoxy, nitro, halogen, carboxy, lower carbalkoxy, carbophenoxy, carbamoyl, carbamoyl which is monosubstituted or disubstituted by lower alkyl, phenyl and/or lower phenylalkyl, sulfamoyl, sulfamoyl which is monosubstituted or disubstituted by lower alkyl, phenyl and/or lower phenylalkyl, lower alkylsulfonyl, lower alkanoylamino and benzoylamino, - and/or by a fiber-reactive group.

5. Compounds according to claim 1, 2 or 3, characterized by that D as radical of a diazo component is the benzene or naphthalene nucleus to which the triazinylamino group and the sulfo group(s) indicated may be bonded and D, in addition to these groups and the metal-complexing carboxy or hydroxy group which is bonded to D in orthoposition relative to the azo group, may also be substituted by substituents from the group consisting of methoxy, ethoxy, methyl, ethyl, carboxy, nitro, chlorine and bromine.

6. Compounds according to any of claims 1 to 5, characterized by that n represents the number zero.

7. Compounds according to any of claims 1 to 6, characterized by that the bis-(aminotriazinylaminophenoxy)-ether radical is bonded to both K.

8. Compounds according to any of - claims 1 to 6, characterized by that K represents a radical of the general formula

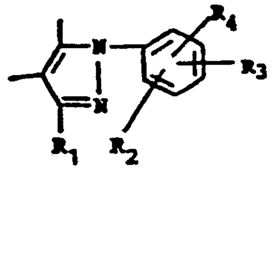

or

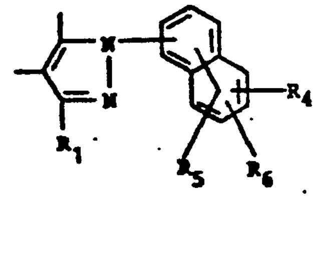

in which $R_1$ is the methyl group or the carboxy group, $R_2$ is a hydrogen atom, a methyl, ethyl, ethoxy, methoxy, carboxy or nitro group or one of the sulfo groups indicated in the formula (1) of claim 1 or a chlorine or bromine atom, $R_3$ is a hydrogen atom or a chlorine atom or a methyl, ethyl, methoxy or ethoxy group or one of the sulfo groups indicated in the formula (1) of claim 1, $R_4$ is the halogenotriazinylamino radical indicated in the formula (1) of claim 1, $R_5$ denotes a hydrogen atom or one of the sulfo groups indicated in the formula (1) of claim 1, and $R_6$ represents one of the sulfo groups indicated in the formula (1) of claim 1.

9. Compounds according to any of claims 1 to 6, characterized by that K represents a radical of the general formula

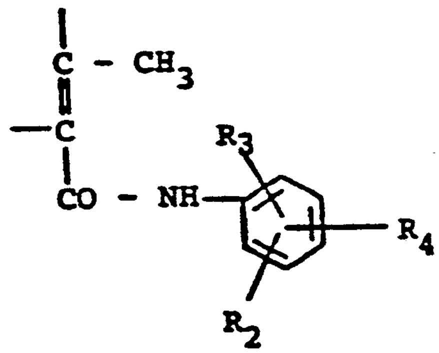

or

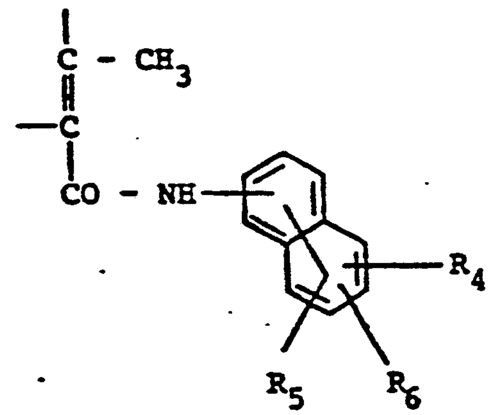

in which $R_2$ is a hydrogen atom, a methyl, ethyl, ethoxy, methoxy, carboxy or nitro group or one of the sulfo groups indicated im the formula (1) of claim 1 or a chlorine or bromine atom, $R_3$ is a hydrogen atom or a chlorine atom or a methyl, ethyl, methoxy or ethoxy group or one of the sulfo groups indicated in the formula (1) of claim 1, $R_4$ is the halogenotriazinylamino radical indicated in the formula (1) of claim 1, $R_5$ denotes a hydrogen atom or one of the sulfo groups indicated in the formula (1) of claim 1, and $R_6$ represents one of the sulfo groups indicated in the formula (1) of claim 1.

10. Compounds according to any of claims 1 to 6, characterized by that which K is a naphthalene radical in which the hydroxy group is bonded in ortho-position relative to the azo group and K, in addition to these two groups, is also substituted by the halogenotriazinylamino radical indicated in the formula (1) of claim 1 and by one or two of the sulfo groups indicated in the formula (1) of claim 1.

11. Compounds according to any of claims 1 to 10, characterized by that Z denotes the vinyl group or the β-sulfatoethyl group.

12. Compounds according to any of claims 1 to 11, characterized by that M represents a hydrogen atom or an alkali metal.

13. Compounds according to claim 5, characterized by that D is substituted by a fiber-reactive group.

14. Compounds according to any of clains 1 to 5, characterized by that the fiber-reactive group bonded to D or the fiber-reactive group bonded to K is the vinylsulfonyl or a β-sulfatoethylsulfonyl group.

15. A process for the preparation of the heavy-metal complex compounds mentioned and defined in claim 1, characterized by that

a metal-free compound of the general formula (1) mentioned and defined in claim 1, is reacted with a compound which donates heavy metal, or

that a heavy-metal complex compound of a compound of the general formula (8)

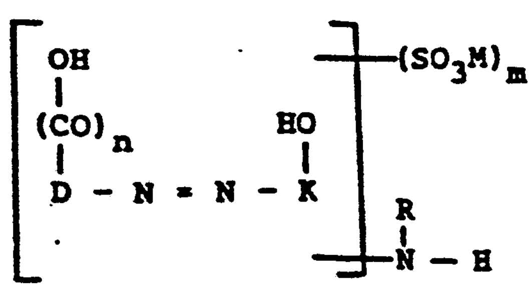

in which -K-OH, D, M, R, m and n are defined as above and the amino group of the formula -NHR is bonded to D or to K, is first monoacylated in an equimolar anount with cyanuric chloride or cyanuric fluoride and the dihalogenotriazinylamino heavy-metal complex azo compound is reacted in twice the molar amount with the diamino compound of the general formula

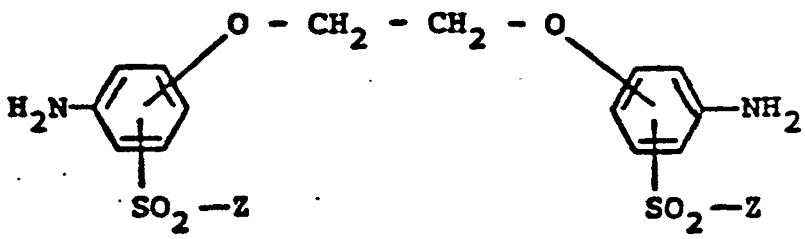

in which Z have the meanings mentioned in claim 1 and the two groups $-SO_2-Z$ have identical meanings, or that a heavy-metal complex compound of a compound of the general formula (8) mentioned and defined above is reacted in twice the molar amount with a bis-dihalogenotriazinylamino compound of the general formula

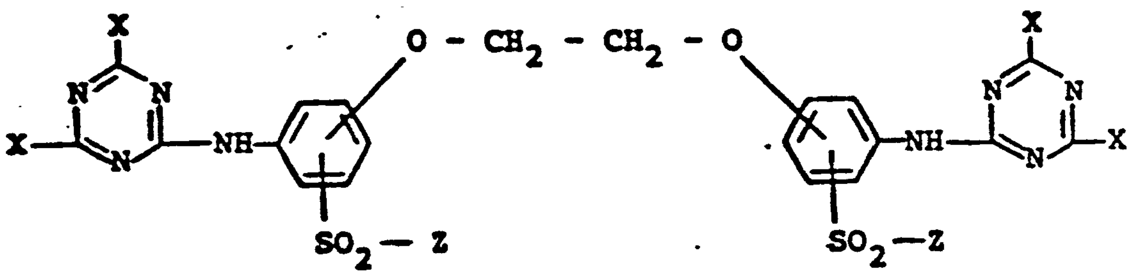

in which X and Z have the meanings mentioned in claim 1 and the two groups $-SO_2-Z$ have identical meanings.

16. A process for the preparation of the 1:1-copper complex compounds mentioned and defined in claim 1, in which, however, n denotes the number zero, characterized by that a metal-free azo compound of the general formula

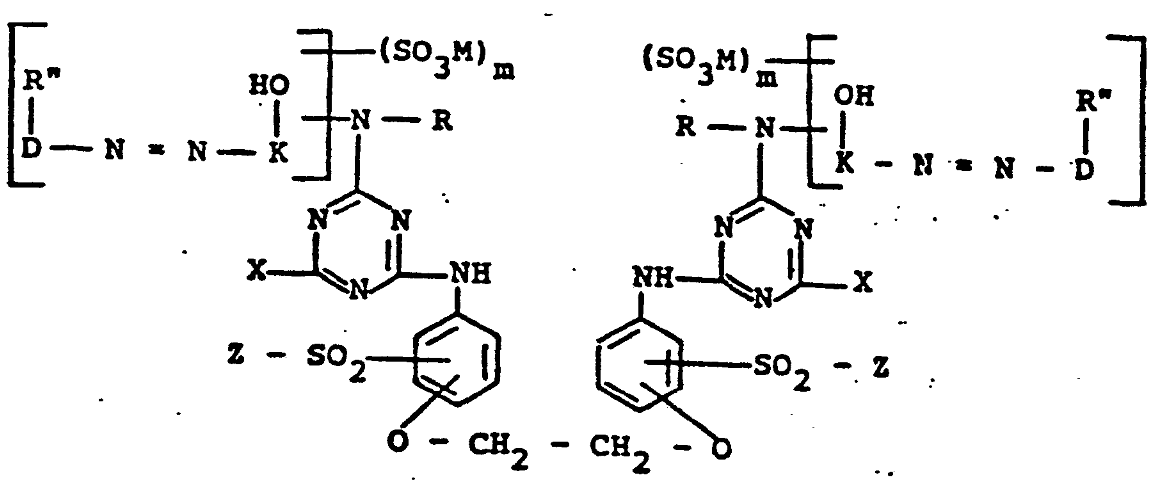

in which R″ is bonded to D in ortho-position relative to the azo group and denotes a hydrogen atom or a lower alkoxy group and the formula radical -K-OH as well as D, M, R, X and m and the groups $-SO_2-Z$ have the meanings mentioned in claim 1, is reacted with a copperdonating compound under oxidizing or dealkylating conditions.

17. Use of the heavy-metal complex compounds defined in claim 17, for dyeing hydroxy and/or carboxamide-containing material.